(19) Europäisches Patentamt
European Patent Office
Office européen des brevets

(11) **EP 2 671 443 B1**

(12) **FASCICULE DE BREVET EUROPEEN**

(45) Date de publication et mention
de la délivrance du brevet:
**21.11.2018 Bulletin 2018/47**

(51) Int Cl.:
*A01C 21/00* [(2006.01)]    *C12N 15/82* [(2006.01)]
*G01N 33/483* [(2006.01)]

(21) Numéro de dépôt: **13366003.5**

(22) Date de dépôt: **05.06.2013**

(54) **Diagnostique multivarie de l'etat nutritionnel des cultures**

Multivariates Diagnoseverfahren des Ernährungszustandes von Kulturen

Multivariate diagnosis of the nutritional condition of crops

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2012 FR 1201637**

(43) Date de publication de la demande:
**11.12.2013 Bulletin 2013/50**

(73) Titulaire: **Polyor SARL**
**54000 Nancy (FR)**

(72) Inventeur: **CLAUDE, Pierre-Philippe**
**54000 Nancy (FR)**

(56) Documents cités:
- **KHIARI LOTFI ET AL: "The phosphorus Compositional Nutrient Diagnosis range for potato", AGRONOMY JOURNAL, vol. 93, no. 4, juillet 2001 (2001-07), pages 815-819, XP009168891, ISSN: 0002-1962**
- **PARENT L E ET AL: "A THEORETICAL CONCEPT OF COMPOSITIONAL NUTRIENT DIAGNOSIS", JOURNAL OF THE AMERICAN SOCIETY FOR HORTICULTURAL SCIENCE, vol. 117, no. 2, 1992, pages 239-242, XP009168892, ISSN: 0003-1062**
- **MÃ NICA G AGNUSDEI ET AL: "Critical N concentration can vary with growth conditions in forage grasses: implications for plant N status assessment and N deficiency diagnosis", NUTRIENT CYCLING IN AGROECOSYSTEMS, KLUWER ACADEMIC PUBLISHERS, DO, vol. 88, no. 2, 16 février 2010 (2010-02-16), pages 215-230, XP019818672, ISSN: 1573-0867**
- **HUETT D O ET AL: "DETERMINATION OF CRITICAL NITROGEN CONCENTRATIONS OF ZUCCHINI SQUASH CUCURBITA-PEPO L. CULTIVAR BLACKJACK GROWN IN SAND CULTURE", AUSTRALIAN JOURNAL OF EXPERIMENTAL AGRICULTURE, vol. 31, no. 6, 1991, pages 835-842, XP009168848, ISSN: 0816-1089**

**Description**

**DOMAINE TECHNIQUE DE L'INVENTION**

L'agronomie et la nutrition minéral des cultures par pilotage des apports d'engrais N, P, K, calciques (Ca), magnésiques (Mg), voire oligo - élémentaires (*eg.* Fe, Mn, Cu, Zn, etc.). Le diagnostique de l'état nutritionnel des cultures est aussi concerné (*eg.* NNI, PNI, CND, DRIS, etc.)

**ÉTAT DE LA TECHNIQUE**

DIAGNOSTIQUE NUTRITIONNEL DES CULTURE

Le diagnostique de l'état nutritionnel des cultures, avantageusement intra - saisonnier, est recherché en agronomie. Celui-ci doit indiquer en temps utile s'il est nécessaire d'apporter des compléments nutritionnels à la culture en cours, voire d'ajuster - à la hausse ou à la baisse, les derniers apports fractionnés d'engrais, azotés notamment, afin d'assurer un plein rendement.

*Approche (univariée) par valeurs critiques (eg. NNI, PNI) :*

Il s'agit ici de valeurs uniques, généralement des teneurs histologiques d'azote ou de phosphore, en dessous desquelles la production maximale de biomasses, y compris les rendements, sont compromises. Ces valeurs critiques dépendent du stade de croissance, les teneurs nutritionnelles étant diluées au sein de biomasses progressivement de plus en plus abondantes. Dans le cas de l'azote (Jeuffroy et al. 2002, Gastal et Lemaire 2002) des valeurs Nc critiques sont décrites par des fonctions de type Nc = $a$MSPA$^{-b}$, où $b$ et $a$ sont des coefficients propres à diverses cultures telles que le blé, le colza, le maïs, voire le riz, la tomate, le tournesol et le pois de conserve (*op. cit*, Justes et al. 1994, Colnenne et al. 1998, Seassau et al. 2010, Marino et al. 2004, Lemaire et al. 2008, Plenet et Lemaire 2000). Les teneurs histologiques en N au delà de Nc sont donc en ce sens superflues, l'indice de nutrition azotée (*nitrogen nutrition index,* NNI ; op. cit.) défini comme le ratio N/Nc n'étant plus unitaire (1,00) mais *supra* optimal. *Idem* pour les valeurs de N inférieures à Nc et les NNI ainsi *infra* optimaux inférieurs à 1.

Les indices de nutrition phosphaté (*phosphorus nutrition index,* PNI ; Jouany et al. 2004, Salette et Huché 1991) et/ou potassique (iP (*alias* PNI) et iK ; Farrugia et al. 2000) sont eux plus simplement déterminés à partir des teneurs histologiques d'azote via une simple relation linéaire %K$_c$ ou %P$_c$ = $a$N+$b$, $a$ et $b$ étant eux aussi des coefficients spécifiques à K et P et propres aux diverses cultures, y compris et surtout les cultures fourragères (Farrugia et al. 2000, Jouany et al. 2004/2005, Leibisch 2011). En ce sens, les concepts d'iP (PNI) et/ou iK (KNI) - dans les faits une série préétablie de ratios N:P et/ou N:K, appellent celui des *ratios élémentaires* (ratios nutritionnels).

*Approche (multivariée) par ratios (élémentaires) nutritionnels (eg. DRIS, CND)*

Cette approche reconnaît plutôt un *équilibre nutritionnel* à maintenir à travers la croissance et le développement de la culture. Cet équilibre se manifeste par des ratios élémentaires relativement inchangés indépendamment de la biomasse ou le stade de croissance. Une première école préconise des indices élémentaires comprenant la moyenne *arithmétique* des n-1 ratios élémentaires A/B + A/C + ... + A/Z, n étant ici le nombre d'éléments A à Z compris dans le diagnostique, avantageusement cinq (N, P, K, Ca et Mg), voire une dizaine (*idem,* plus Fe, B, Cu, Mn, :Mo, etc.). Pour une parcelle en particulier à diagnostiquer, ces ratios sont comparés à ceux provenant d'une parcelle référence désignée a *priori* à hauts rendements. Le diagnostique emblématique de cette école est la méthode dite DRIS (*Diagnostique and recommendation integrated system* ; Bangroo et al. 2010, Akhter 2011, Silveria et al. 2005). Une deuxième école préconise plutôt l'utilisation de moyennes *géométriques* comprenant tous les éléments A à Z. De plus et en principe cette approche intègre une solution au problème de résonance lié à la structure de corrélation entre les Z éléments. Voir Parent et Dafir 1992 pour les aspects théoriques de cette approche - dite CND (*Compositional nutrient diagnosis*), et Khiari et al. 2001a, 2001b pour sa réalisation avec maïs et pomme de terre, respectivement. A ce stade et malgré un certain perfectionnement de cette dernière approche géométrique, les diagnostiques de type DRIS et CND sont assez comparables en terme se diagnostiques et préconisations.

Il existe d'autres écoles qui elles tiennent compte des interactions élémentaires au sein de la plante, y compris de l'azote et du carbone (Osaki et al. 1966). Diverses fonctions reliant de tels indices azoto - carbonés (carbon-nitrogen interaction ; CNI) ont ainsi été développées, sans pour autant faire le lien avec la notion de NNI et/ou de Nc.

ÉTABLISSEMENT DES NORMES : TROP ARBITRAIRE ?

Or, les susdites approches uni- et multi-variées sont *a priori* antinomiques. L'une préconise des valeurs critiques uniques pour chacun des éléments diagnostiqués. Ces valeurs varieront selon le stade de croissance en raison d'une dilution de ces éléments dans des biomasses plus ou moins abondantes ; il s'agit donc ici d'éviter des *carences* nutritionnelles. L'autre préconise au contraire de maintenir inchangés des ratios nutritionnels malgré l'accroissement de la biomasse végétale à travers la campagne ; il s'agit donc ici d'éviter des *déséquilibres* nutritionnels. Du coup, l'établissement de normes DRIS (*eg.* Bangroo et al. 2010, Akhter 2011, Silveria et al. 2005) ce fait sur la base des rendements agronomiques de parcelles a *priori* à haut rendements, sans pour autant exclure la possibilité de carences nutritionnelles. Il s'en suit que de telles normes sont trop souvent établies sur des parcelles dont NNI n'atteint pas 1,00 puisque de tels indices uniques sont antinomiques à l'approche multi-variée qui prône plutôt le respect de ratios élémentaires.

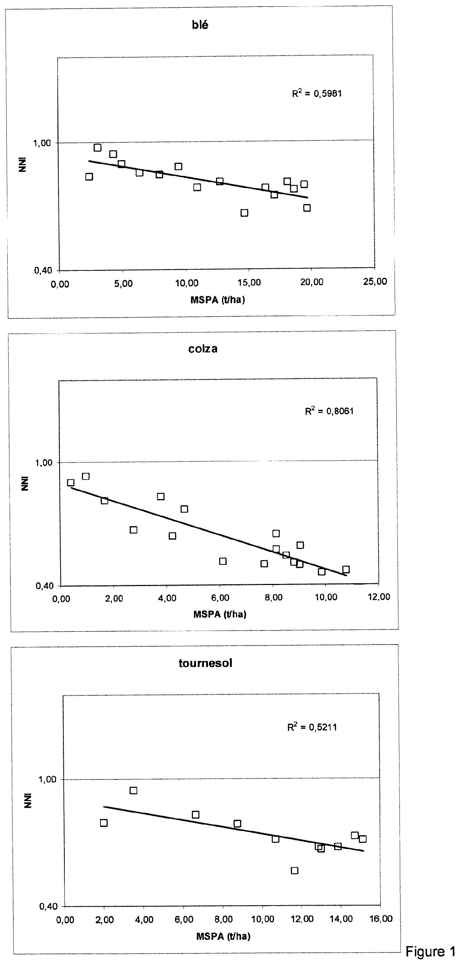

De telles normes sont donc foncièrement arbitraires, la parcelle de référence étant *décrétée* optimale qu'en raison de son haut rendement, voire de sa régie (sur)intensive. Pire, dans le cas de Khiari et al. 2001a, les nutriments autres que le P sont supposés en quantités suffisantes et non excessives (*op. cit.,* page 815). C'est précisément cette supposition, cet a *priori,* qui fait problème. Selon Khiari et al. 2001a, lesdites valeurs critiques minimales servant à établir des indices nutritionnels normaux nécessitent *a priori* une séparation entre les parcelles agronomiques à faibles et hauts rendement. Bien qu'objectif et fondée sur une fonction cumulative et rationnelle de la variance (op. cit. figure 1), la création de telles sous - populations aux rendements plus ou moins élevés demeure néanmoins arbitraire.

Tout le problème est donc dans ce manque d'universalité du fait d'une séparation *a priori* entre sous - populations à faibles et hauts rendements ; la performance agronomique étant en bonne partie déterminée localement, les normes CND, DRIS ou autres le seront aussi. En ce sens, Khiari et al. 2001b pèchent en définissant les normes nutritionnelles par rapport aux résultats agronomiques recherchés ; ils établissent *a priori* les objectifs des rendements (*yield goal* ; op. cit. p. 816 / colonne de droite) afin de fixer les ratios (indices) nutritionnels ; ces indices devant déterminer le potentiel de rendement, cette démarche est donc pour le moins tautologique.

L'utilisation de telles normes, DRIS par exemple, ne peut que fausser le diagnostique multi - varié de l'état nutritionnel des cultures. Pour preuve, des parcelles de grandes cultures en régies intensives à hauts rendements n'atteignent pas nécessairement NNI = 1,00, loin de là (Figure 1). A noter que pour trois cultures à la Figure 1, NNI est systématiquement *inférieur* 1,00 dans tous les cas, et cela à travers toute la campagne. Pire ; cette infériorité des NNI s'accroît parfois à travers le temps. Pareillement, les teneurs relatives à la matière sèche pour les fourrages herbacés recommandées par le Comifer (http://www.comifer.asso.fr/) sont systématiquement fondés sur des t-MS / coupe à des NNI bien inférieurs à 1,00, à savoir de l'ordre de 0,6 à 0,9. La sous - fertilisation en termes de NNI des parcelles agronomiques de références servant à établir des normes nutritionnelles - critiques ou rationnelles, semble donc être assez généralisée.

**DIVULGATION DE L'INVENTION**

*Problème technique*

Les cultures agronomiques à hauts potentiels de rendement ont généralement une alimentation élémentaire soit carencée, soit déséquilibrée, voire les deux. Cet état de fait provient d'une certaine antinomie entre les deux approches au diagnostique de l'état nutritionnel des cultures dites uni- et multi-variée.

Le problème technique provient du fait que les diagnostiques multi-variés rationnels, pourtant en principe les plus compréhensifs, sont fondés sur des valeurs rationnelles normales (normes) de types a/b (*eg.* DRIS, CND) issues de parcelles décrétées *a priori* comme étant à hauts rendements et/ou en régies (sur)intensives et donc désignées arbitrairement comme références optimales. Par souci de ne pas s'appuyer sur des valeurs critiques uniques en principe contraires à l'approche diagnostique multivariée, de tels diagnostiques rationnels sont nécessairement peu fiables et ne garantissent aucunement l'élaboration de pleins rendements agronomiques.

Les susdites normes ne peuvent pas tenir compte de teneurs histologiques élémentaires critiques, seuils contraires à la notion d'équilibre nutritionnel fondé sur le seul maintien de ratios élémentaires normaux. Pour préconiser des indices élémentaires aptes à assurer un plein rendement agronomique, les approches DRIS et CND, à titre d'exemple et fondées respectivement sur le calcul de moyennes arithmétiques et géométriques respectivement, doivent désigner *a priori* ces pleins rendements. C'est seulement par après, que les teneurs histologiques élémentaires caractéristiques de ces supposément pleins rendements deviendront des normes.

Or, ces approches exemplifiées par DRIS et CND me semble *tautologiques* ; elles définissent *a priori* l'effet desdits indices en fonction de performance agronomiques arbitrairement, bien qu'objectivement (*cf.* Khiari et al. 2001a et 2001b), supposées comme optimales. Or, rien n'indique que les parcelles agronomiques de références ont effectivement atteintes leurs rendements optima ; elles sont seulement les plus performantes dans une certaine localité à un moment donnée ; elles n'ont rien d'universelle. Pire ; bon nombre d'entre elles sont dans les faits sous - alimentées en azote, notamment ; voir en ce sens ici la Figure 1 illustrant la progression des indices de nutrition azotée (NNI) à travers la campagne.

*Solution technique*

La présente invention évite cet *a priori* fâcheux en combinant partiellement ces approches multi-variées de types DRIS et CND et critiques de type NNI. Elle ne nécessite plus d'établir *a priori* les niveaux de performances agronomiques supposément optima mais dans les faits souhaités, mais plutôt le simple respect d'un minima d'azote histologique critique, Nc, implique dans le calcul de NNI ; elle n'est donc plus tautologique. Il s'agit donc d'ajuster les normes élémentaires $x_n$ afin de satisfaire à la condition NNI $\approx$ 1,00, ou du moins une valeur de NNI satisfaisante et/ou recherchée. Pour ce faire, il faudra établir, pour chacune des cultures et des éléments considérés, une fonction dite *fonction azoto - nutritionnelle* (FAN) ;

$$[e] = x_n = f(NNI),$$

où [e] est la *teneur histologique* d'un quelconque des n éléments nutritifs pour la culture (% et/ou p/p), et NNI est l'indice de nutrition azotée au sens entendu ;

$$NNI = N/N_C.$$

où N est la teneur histologique [e] de l'azote (N) de la culture en question. Déterminer NNI sera possible pour chacune des cultures dans la mesure ou la MSPA (matière sèche des parties aériennes, t/ha) ainsi qu'une fonction préalablement établie pour chacune des cultures selon les règles de l'art existe ;

$$N_C = a\text{MSPA}^{-b},$$

où ***a*** et ***b*** sont des coefficients empiriques propres à chacune des cultures. Une fois les fonctions [e] = f(NNI) établie pour chacun des éléments nutritifs considérés, il est possible d'extrapoler à NNI = 1,0 et déterminer [e] respectant ainsi la condition d'une alimentation en N non - limitante pour la production de biomasse et/ou l'élaboration du rendement agronomique de la culture. Ce sont ces valeurs [e] qui serviront maintenant à établir les normes rationnelles a/b multi-variées (*cf.* Bangroo et al. 2010), soit de type DRIS, soit de type CND, et non des valeurs provenant plus simplement de parcelles désignées comme références pour cause de hauts rendements et/ou de régie intensive.

Concrètement, il s'agit donc d'une méthode de diagnostique multivariée de l'état nutritionnel d'une culture et de préconisation des apports élémentaires à effectuer pour optimiser cet état nutritionnel comportant les étapes suivantes ;

- le prélèvement des matières sèches des parties aériennes et la détermination de leurs n teneurs histologiques élémentaire, X, en macroéléments nutritifs choisis parmi un groupe comprenant N, P, K, Ca, Mg, et/ou S, voire Na, et/ou en oligoéléments nutritifs choisis parmi un group comprenant Fe, Mn, Zn, Cu, B, Mo, Cl, Si et/ou Co ;

- l'établissement de teneurs histologiques normales, $x_n$, pour chacun des n susdites éléments nutritifs considérés ;

- par rapport à ces n valeurs normales $x_n$, le calcul d'indices nutritionnels, $Ix_n$, pour chacun des n susdits éléments nutritifs par comparaisons multiples de ratios nutritionnels fondées sur le calcul de moyennes arithmétiques telles que les approches dites DRIS (*diagnosis and recommendation integrated system*), sur le calcul de moyennes géométriques telles que CND (*compositional nutrient diagnosis*), ou encore toutes autre méthode multi-variée prenant en compte l'interactions des susdits éléments nutritifs, l'age et/ou la production de matières sèches de la culture à un stade donné ;

- en fonction des susdits indices nutritionnels, l'établissement des teneurs histologiques élémentaires à atteindre pour chacun des susdits éléments nutritifs ;

- en fonction des susdites teneurs histologiques élémentaires à atteindre pour chacune des susdits éléments, la préconisation des apports élémentaires à apporter à la culture pour ainsi en optimiser l'état nutritionnel en terme d'absence de carences et/ou de déséquilibre nutritionnel ;

caractérisée en ce que ;

- les n valeurs normales $x_n$ sont déterminées par extrapolation d'une *fonction azoto - nutritonnelle* (FAN) de type $x_n$ = f(NNI) lorsque NNI (*nitrogen nutrition index, alias* indice de nutrition azotée) est égale voire supérieur à une certaine valeur entre 0,90 et 1,1, soit de 1,00 +/- 0,10;
- ladite FAN est décrite mathématiquement selon une fonction choisie parmi un group comprenant des fonctions polynomiales, avantageusement de degré 2, exponentielles, puissances, logarithmiques, voire logistiques et/ou non - linéaires comprenant des asymptotes supérieures et/ou inférieurs.

Cela dit, les valeurs normales $x_n$ sont déterminées par extrapolation d'une *fonction azoto - nutritonnelle* (FAN) de type $x_n$ = f(NNI) lorsque NNI (*nitrogen nutrition index, alias* indice de nutrition azotée) est avantageusement égale voire supérieur à 1.

Le calcul d'indices nutritionnels, $Ix_n$, pour chacun de ces n éléments nutritifs est effectuée comme suit à l'aide de *moyennes arithmétiques* (eg. DRIS ; Bangroo et al. 2010);

$$Ix_A = (f(A/B) + f(A/C) + f(A/D) \ldots + f(A/Z)) / n\text{-}1,$$

$$Ix_B = (\text{-}f(A/B) + f(B/C) + f(B/D) \ldots + f(B/Z)) / n\text{-}1,$$

$$Ix_C = (\text{-}f(A/C) - f(B/C) + f(C/D) \ldots + f(C/Z)) / n\text{-}1,$$

$$\vdots$$

$$Ix_Z = (\text{-}f(A/Z) - f(B/Z) - f(C/Z) \ldots - f(Y/Z)) / n\text{-}1$$

où n est le nombre d'éléments nutritifs en considération, et A, B, C etc. jusqu'à Z une série de n teneurs histologiques, $X_n$, de ces n (oligo)éléments nutritifs telle que proposée ici et établies à un stade de développement donné et la comparaison de chaque indice A/B, A/C, A/D, etc., à un ratio normal correspondant a/b, a/c, a/d, etc., permettant de constater des écarts appréciables comme suit ;

si A/B est plus grande ou égale à a/b, donc -

$$f(A/B) = [\{(A/B) / (a/b)\} - 1] \times (1000/CV)$$

si A/B est plus petit que a/b, donc -

$$f(A/B) = [1 - \{(A/B) / (a/b)\}] \times (1000/CV)$$

lorsque a, b, c etc. jusqu'à z sont les valeurs normales, x, pour ces mêmes n (oligo)éléments ainsi déterminées par extrapolation d'une *fonction azoto - nutritonnelle* (FAN) de type $x_n$ = f(NNI) lorsque NNI est égale voire supérieur à 1,00, et CV le coefficient de variation associé avec la norme rationnelle de type a/b, a/c, etc.

Le calcul d'indices nutritionnel, $Ix_n$, pour chacun des n (oligo)éléments peut aussi ce fait comme suit à l'aide de *moyennes géométriques* (eg. CND ; Khiari *et al.* 2001) ;

$$Ix_n = (1/Sx_n) \times (\log(X_n / g(X)) - \log(x_n / g(x)))$$

où g(X) et g(x) sont respectivement les moyennes géométriques des teneurs histologiques des n (oligo)éléments nutritifs (i) mesurées sur la culture en cour de diagnostique (g(X)) et (ii) normales déterminées par extrapolation d'une *fonction azoto - nutritonnelle* (FAN) de type $x_n$ = f(NNI) lorsque NNI (*nitrogen nutrition index, alias* indice de nutrition azotée) est égale voire supérieur à 1,00, tandis que $Sx_D$ est la racine carrée du coefficient de variation (CV) autrement utilisé dans le calcul des indices DRIS, à savoir le CV le coefficient de variation associé avec la norme rationnelle de type a/b, a/c, etc., et enfin $X_n$ et $x_n$ sont les teneurs histologiques élémentaires pour chacun des n (oligo)éléments en considération.

Le CV (coefficient de variation, %) normalement associé à la norme de type a/b peut lui être remplacé par la variable dite CVAR ;

$$CVAR = \{(\%R_i{}^2 - 100)\}^{1/2} + \{(\%R_j{}^2 - 100)\}^{1/2}$$

où pour $\%R_i{}^2$, $\%R_i{}^2$, i et j indiquent les deux coefficients de détermination (%) des susdites n fonctions FAN, $x_n = f(NNI)$ pour ces deux de n (oligo)éléments en considération.

L'écart de chacun des indices par rapport à 0 indique une déséquilibre des teneurs de l'(oligo)élément nutritionnel par rapport aux autres n-1 (oligo)éléments considérés, un indice nutritionnel négatif révélant ici une carence relative et un indices nutritionnel positif révélant un excès relatif de l'(oligo)éléments nutritif en question, tandis que la somme des indices nutritionnels pour les n (oligo)éléments considérés doit égaler 0 pour qu'un diagnostique d'équilibre nutritionnel soit établi.

Or, l'établissement des teneurs histologiques à atteindre est effectué par ajustement réitératif des valeurs des différentes teneurs histologiques élémentaires constatées pour la culture en cour d'élaboration de rendement de manière à rendre lesdits indices nutritionnels ainsi que leur somme égale à 0. A noter que pour éviter des incohérences et/ou des préconisations irréalisables, il est avantageux que seules les valeurs des teneurs histologiques élémentaires pour les (oligo)éléments nutritifs affichant des indices nutritionnels négatifs sont ajustés.

La préconisation des apports élémentaires pour atteindre pour les n les susdites teneurs histologiques élémentaires est elle calculée comme suit ;

$$([e]_n - X_n) \cdot MSPA$$

où $[e]_n$ est la teneur histologique élémentaire cible à atteindre établie une fois le susdit ajustement réitératif effectué, $X_n$ est teneur histologique élémentaire constatée que l'on souhaite corrigée une fois le susdit diagnostique établi, et MSPA la matière sèche des parties aériennes, avantageusement exprimée en tonnes par hectare (t/ha).

Plus généralement, le prélèvement des matières sèches des parties aériennes pour la susdite détermination de leurs n teneurs histologiques élémentaire en macroéléments nutritifs et/ou oligoéléments est effectué entre ou aux stades de développement dits BBCH 31 et 69, plus particulièrement entre ou aux stades BBCH 35 et 61, et avantageusement entre ou aux stades BBCH 39 et 55. Les matières sèches des parties aériennes pour la susdite détermination de leurs n teneurs histologiques élémentaire en macroéléments nutritifs et/ou oligoéléments comprennent que le feuillage, plus particulièrement le feuillage et les inflorescences, voire plus avantageusement l'ensemble de la biomasse aérienne comprenant les tiges, les inflorescences, le feuillage et, le cas échéant, les fruits, y compris donc les grains, en formation.

Enfin, la culture est une culture agronomique, maraîchère, arboricole, viticole ou horticole, voire plus spécifiquement choisie parmi un groupe comprenant les grandes cultures telles que le blé, le colza et l'orge, notamment d'hiver, le maïs et la sorgho, les cultures fourragères, notamment non Fabaceae telles que le raygras (*Lolium* spp.), ainsi que des cultures maraîchères telles que la tomate, la laitue et la fraise, , la vigne (*Vitis vinifera*), voire des cultures horticoles telles que les bégonias ou toutes autre fleurs en pot ou coupé, ainsi que les culture arboricoles telles que la pomme, l'abricot ou la poire.

*Avantages apportés et activité inventive*

L'invention permet surtout d'établir précisément des seuils critiques, sous la forme de teneurs histologiques, [e], à atteindre pour l'ensemble des macro- et oligoéléments, y compris donc maintenant le potassium, le calcium, le magnésium, et à terme aussi pour le fer, le manganèse, etc. Or, selon l'état de la technique à ce jour, ces valeurs (seuils) critiques définies précisément n'existent que pour l'azote, voire le phosphore et le potassium si mis en relations étroites avec l'azote (*cf.* PNI / iP / iK ; Jouany et al. 2004/2005, Salette et Huché 1991, Farrugia et al. 2000, Osaki et al. 1996). Et encore, ces notions iP/iK : N sont vraisemblablement surtout qu'applicables aux cultures fourragères, annuel ou pérennes ; leurs applications aux grandes cultures sont à ma connaissance peu ou pas documentées, sauf exceptions notable (*eg.* Ziadi et al. 2008). La présente invention permet elle de réconcilier les approches uni- et multi-variées, fait notable et utile du fait de leur antinomie. En effet, l'homme du métier évoquant la première réfute de facto la prééminence de ratios nutritionnels pour la santé, le développement et/ou le rendement de la culture agronomique. *In contrario,* l'homme de métier évoquant la deuxième ne peut par reconnaître l'importance de seuils critiques uniques - ceux-ci étant surtout qu'applicables à l'azote, voire plus récemment au phosphore, ne respectant pas nécessairement l'équilibre nutritionnelle si chère à ses yeux. Faire fi de cette antinomie apparente, c'est faire preuve ici d'activité inventive surmontant ce double préjudice.

Toujours dans le même esprit, les indices nutritionnels CND (Khiari et al. 2001a, tableau 4) sont en relation, *a priori,* avec les niveaux de rendements (en pommes de terre) servant à séparer (*partition*) la population en sous - populations à faibles et hauts potentiels de rendement. Ce sont ainsi toujours les rendements qui dictent les valeurs desdits indices et non le contraire. Enfin, il n'y a pas d'analogie entre les carrées desdits indices pour N, P, K, Ca et Mg, et les FAN qui elles dépendent ici de NNI. Ce NNI n'est pas fondé sur l'analyses d'individus *a priori* à haut rendements, mais plutôt sur des teneurs en N critiques (Nc) de la biomasse aérienne d'une culture en particulier tout au cours de la campagne. Une telle utilisation de FAN est donc ainsi plus universelle.

L'approche uni - variée révèle avant tout des *carences* nutritionnelles, tandis que l'approche multivariée révèle elles surtout des *déséquilibres* nutritionnels. Or, Parent et Dafir 1992 proposent d'améliorer ces approches à l'aide de facteurs de correction émanant de l'ensemble des éléments nutritionnels comme le propose déjà DRIS. Cela dit, pour ce faire il faut supposer que les biomasses aériennes des cultures sont identiques (op. cit, p. 239 / colonne de gauche), ce qui n'est pas le cas avec lesdites FAN. Au contraire, celles-ci dépendent de NNI qui lui dépend à sont tour de l'accumulation des MSPA (t/ha), MSPA plus ou moins importantes selon la vigueur et l'état nutritionnel de la culture. Or, si NNI est égale ou supérieur à 1,00, les teneurs histologiques, [e] (*cf.* première revendication de la présente invention), en macroéléments nutritifs (N, P, K, Ca, Mg, et/ou S, voire Na), et/ou en oligoéléments nutritifs (Fe, Mn, Zn, Cu, B, Mo, Cl, Si et/ou Co) sont donc nécessairement optimales. Cette condition n'est pas imposée ou nécessairement satisfaite au sens de Parent et Dafir 1992 ; selon eux, il faut plutôt supposer que les MSPA sont identiques. Parent et al. 1992 ne divulguent donc pas la même théorie que la présente invention. Le lien qu'on pourrait établir entre Parent et Dafir 1992 et Agnusdei et al. 2010 et Huett et al. 1991 traitant de NNI est donc intenable puisque Parent et al. 1992 n'a pas grand chose à voir avec NNI.

## BRÈVE DESCRIPTION DES DESSINS ET FIGURES

**Figure 1 :** Indice de nutrition azoté (NNI) en fonction de la MSPA (matière sèche des parties aériennes, t/ha) pour trois cultures C3 - le blé, le colza et le tournesol, en France (données Sadef 1989) en régie intensive, et donc *a priori* à hauts potentiels de rendements. A noter à travers la campagne, la production de MSPA ne bénéficiée jamais d'un état nutritionnel azoté optimal (NNI = 1,00).

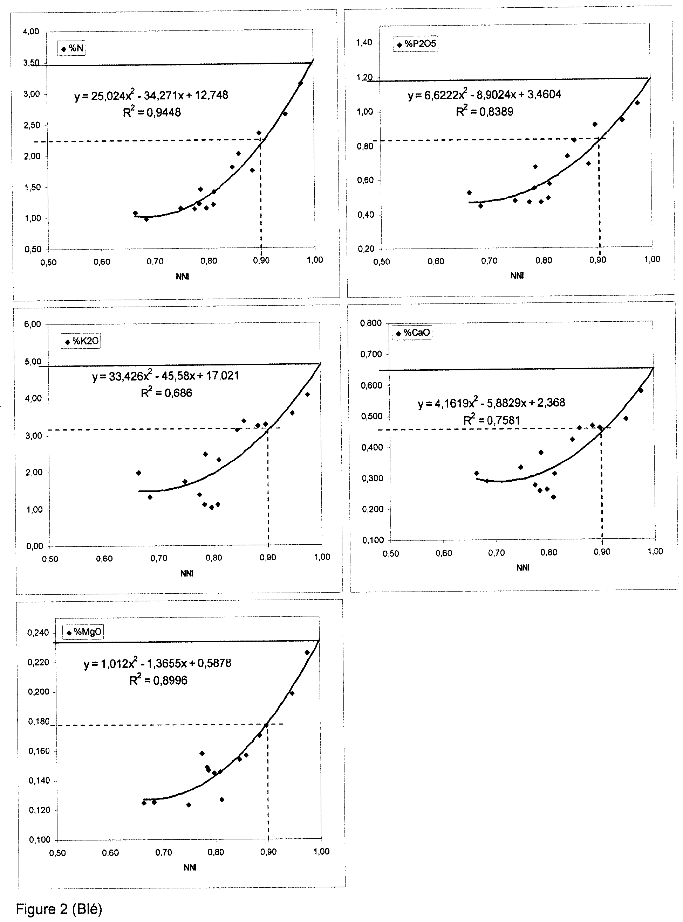

**Figure 2 :** Fonctions azoto - nutritionnelles, dites FAN (quadratiques) [e] = f(NNI), où [e] est la teneur histologique de l'élément nutritif (%), et NNI est l'indice de nutrition azotée ; NNI = N/Nc (voir le texte) pour divers éléments nutritifs de la culture du blé d'hiver. Il s'agit ici de teneurs histologiques pour l'azote (N), le phosphore (P), le potassium (K), le calcium (Ca) et le magnésium (Mg) ; les valeurs lorsque NNI = 1,00 sont déclinées par des traits, et celles lorsque NNI = 0,90 par des pointillés (données Sadef 1989a).

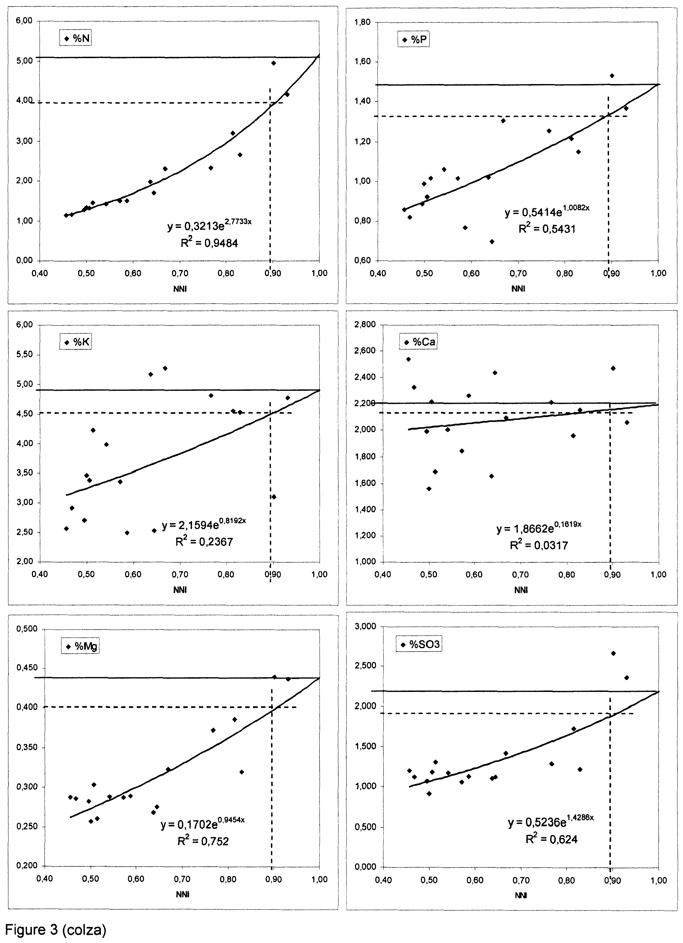

**Figure 3 :** Fonctions azoto - nutritionnelles, dites FAN (quadratiques) [e] = f(NNI), où [e] est la teneur histologique de l'élément nutritif (%), et NNI est l'indice de nutrition azotée ; NNI = N/Nc (voir le texte) pour divers éléments nutritifs de la culture du colza d'hiver. Il s'agit ici de teneurs histologiques pour l'azote (N), le phosphore (P), le potassium (K), le calcium (Ca), le magnésium (Mg) et le soufre (S) ; les valeurs lorsque NNI = 1,00 sont déclinées par des traits, et celles lorsque NNI = 0,90 par des pointillés (données Sadef 1989b).

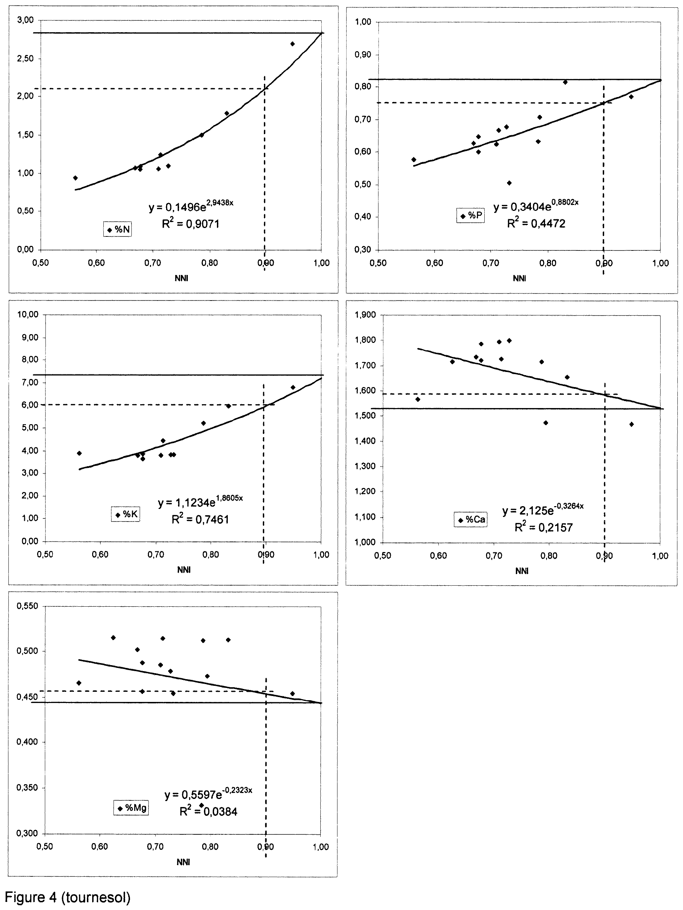

**Figure 4 :** Fonctions azoto - nutritionnelles, dites FAN (quadratiques) [e] = f(NNI), où [e] est la teneur histologique de l'élément nutritif (%), et NNI est l'indice de nutrition azotée ; NNI = N/Nc (voir le texte) pour divers éléments nutritifs de la culture du tournesol. Il s'agit ici de teneurs histologiques pour l'azote (N), le phosphore (P), le potassium (K), le calcium (Ca) et le magnésium (Mg) ; les valeurs lorsque NNI = 1,00 sont déclinées par des traits, et celles lorsque NNI = 0,90 par des pointillés (données Sadef 1989c).

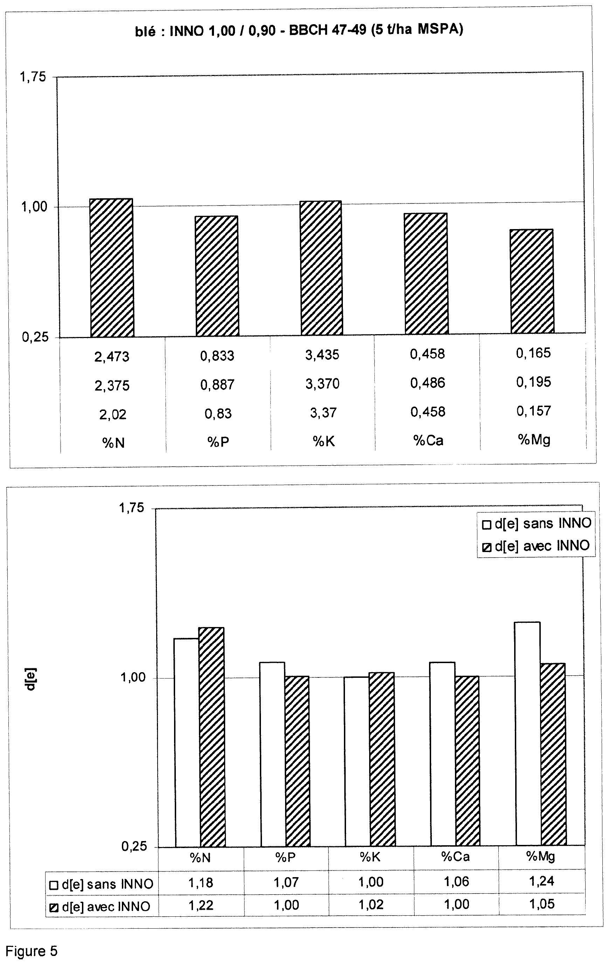

**Figure 5 :** Variation des teneurs histologiques élémentaires, [e], de N, P, K, Ca et Mg à atteindre pour obtenir un plein potentiel de rendement du blé correspondant à un NNI choisi, soit ici 0,90 et 1,00. Les %[e] sur la ligne inférieure de l'abscisse de la figure du haut sont les valeurs initialement constatées et surlignées au Tableau 1, sur la ligne médiane à atteindre si NNI = 0,90, et sur la ligne supérieure si NNI = 1,00 ; en ordonnée le ratio de ces deux dernières valeurs supérieures et médianes lors que NNI = 1,00 et 0,90, respectivement. Les d[e] à la figure du bas sont les ratios de ces valeurs à atteindre mais par rapport aux [e] initialement constatées ($X_n$) ; ces proportions sont aussi explicitées sur le tableau en abscisse.

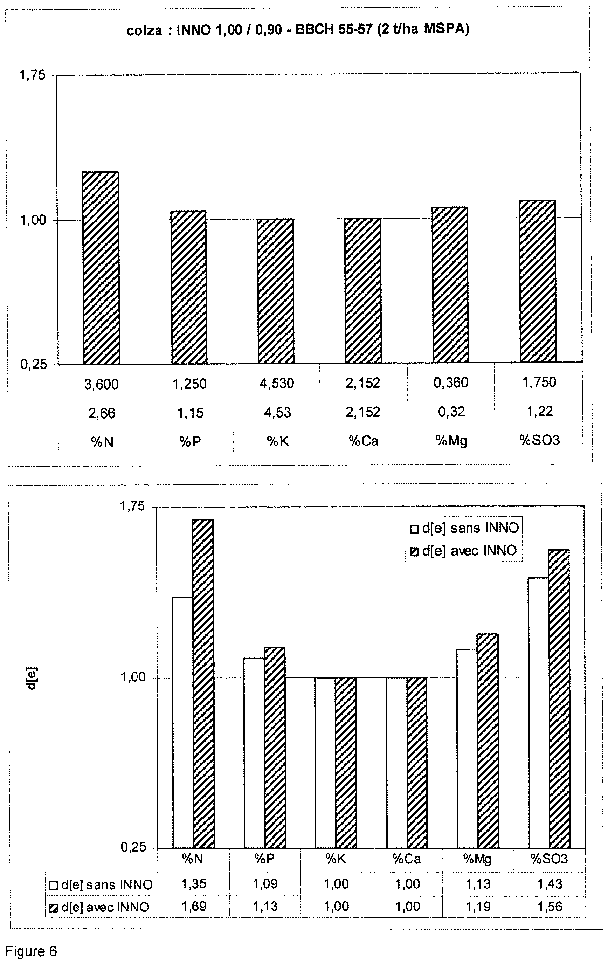

**Figure 6 :** Variation des teneurs histologiques élémentaires, [e], de N, P, K, Ca, Mg et SO3 à atteindre pour obtenir un plein potentiel de rendement du colza correspondant à un NNI choisi, soit ici 0,90 et 1,00. Les %[e] sur la ligne inférieure de l'abscisse de la figure du haut sont les valeurs initialement constatées et surlignées au Tableau 2, sur la ligne médiane à atteindre si NNI = 0,90, et sur la ligne supérieure si NNI = 1,00 ; en ordonnée le ratio de ces deux dernières valeurs supérieures et médianes lors que NNI = 1,00 et 0,90, respectivement. Les d[e] à la figure du bas sont les ratios de ces valeurs à atteindre mais par rapport aux [e] initialement constatées ($X_n$) ; ces proportions sont aussi explicitées sur le tableau en abscisse.

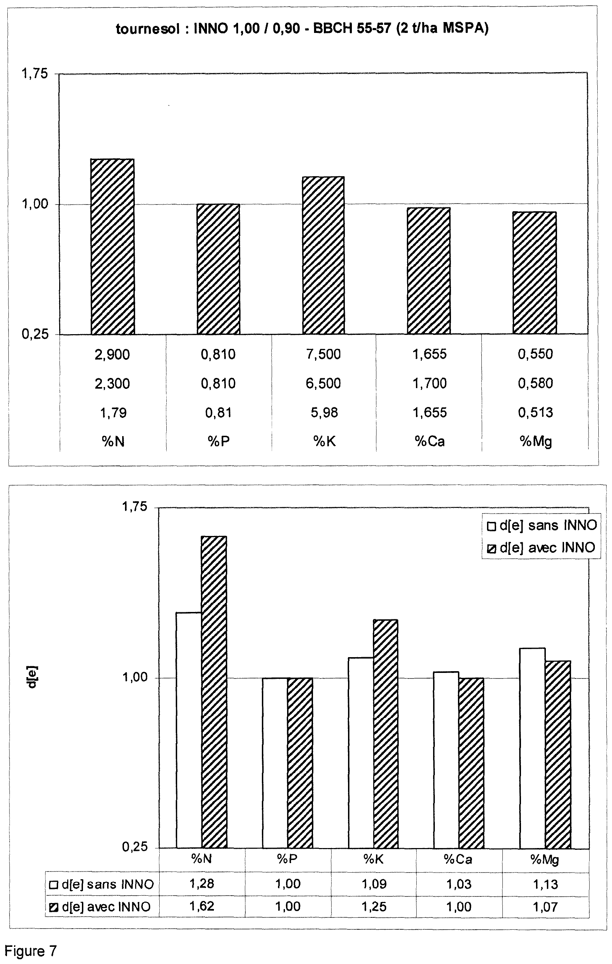

**Figure 7 :** Variation des teneurs histologiques élémentaires, [e], de N, P, K, Ca et Mg à atteindre pour obtenir un plein potentiel de rendement du tournesol correspondant à l'indice de nutrition azote NNI choisi, soit ici 0,90 et 1,00. Les %[e] sur la ligne inférieure de l'abscisse de la figure du haut sont les valeurs initialement constatées et surlignées au Tableau 3, sur la ligne médiane à atteindre si NNI = 0,90, et sur la ligne supérieure si NNI = 1,00 ; en ordonnée le ratio de ces deux dernières valeurs supérieures et médianes lors que NNI = 1,00 et 0,90, respectivement. Les d[e] à la figure du bas sont les ratios de ces valeurs à atteindre mais par rapport aux [e] initialement constatées ($X_n$); ces proportions sont aussi explicitées sur le tableau en abscisse.

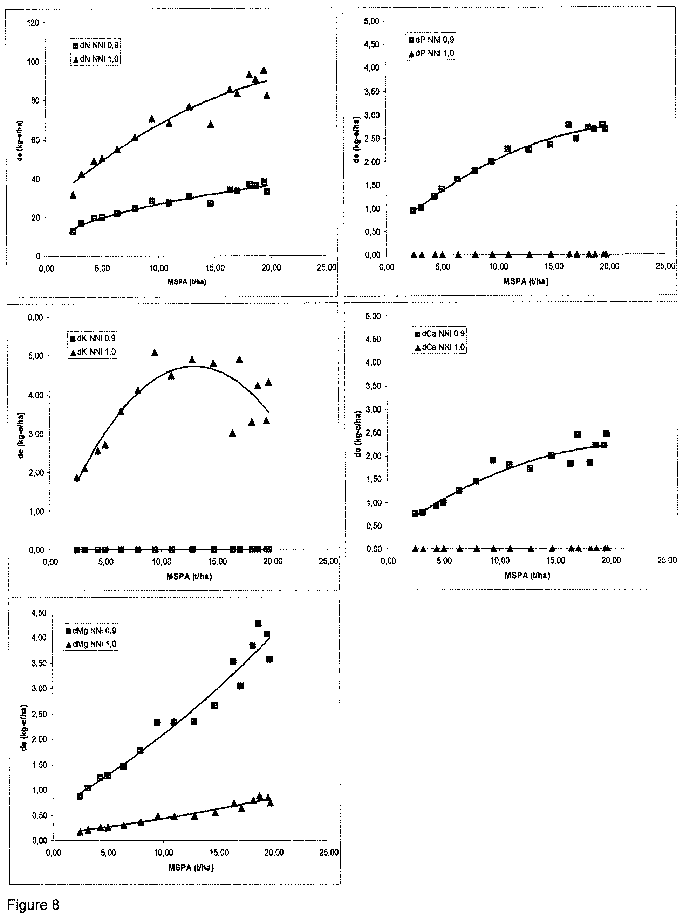

**Figure 8** : Différentiels élémentaires, de, en termes de préconisation des apports d'engrais par hectare (kg-e/ha) pour chaque élément, e, N, P, K, Ca et Mg, lorsque NNI est fixé à 0,90 ou 1,00 de façon à atteindre les teneurs histologiques de ces éléments préconisés pour ce blé ici à la Figure 5. Plus s'accumule la MSPA (t/ha), plus les besoins élémentaires, et donc les de, vont s'accroître.

*Mode de réalisation préféré de l'invention*

*Prélèvement des MSPA et détermination des teneurs histologiques macro/oligo-élémentaire*

Il faut avant tout obtenir ces FAN. Elles peuvent facilement être générées à partir de courbes de mobilisations classiques (*eg.* Justes et al. 1994 pour le blé, Colnenne et al. 1998 pour le colza, Seassau et al. 2010 pour le tournesol). Il faut cependant impérativement avoir la MSPA et la courbe de dilution de l'azote de manière à établir Nc, et donc NNI. Pour établir les normes INNO, il faut déterminer les NNI d'une quelconque parcelle agronomique ; la FAN ainsi obtenue sera extrapolée aux NNI choisi, soit comme de raison mais pas nécessairement, NNI $\approx$ 1,00. Pour ce faire, il faut donc au sens de Justes et al. 1994 échantillonner par prélèvement l'ensemble de la biomasse aérienne, alias matières sèche des parties aériennes (MSPS ; t/ha) de la parcelle à travers la campagne. Ces échantillons auront eux des NNI variables permettant de tracer lesdites FAN une fois les teneurs histologiques déterminées.

Il est aussi possible d'établir des fonctions de type [e] = f(NNI) à partir de la variabilité inter - plants à l'intérieure d'une même parcelle agronomique régie *convenablement,* c'est à dire respectant au minimum les préconisations sous forme d'habituelles doses - X, à hauteurs de 2,25 unités d'azote par quintaux de blé par exemple, soit par exemple environ 200 unités (kg) d'azote par hectare pour 90 quintaux escomptés. En effet, même si l'ensemble de la parcelle n'est pas *a priori* à NNI = 1,00, bon nombre de plants seront au-delà, et bon nombre en dessous, de NNI = 1,00 ; une cinquantaine, voire une vingtaine de plants individuels échantillons pour MSPA et dosés pour N, P, K, Ca et Mg peuvent ainsi générer suffisamment de points variables pour établir [e] = f(NNI).

Enfin, à noter qu'en principe, ces fonctions sont relativement invariables pour une culture donnée dans une zone agro - écologique particulière, l'europe de l'ouest tempérée par exemple. En ce sens, les fonctions [e] = f(NNI) établies à partir des données Sadef 1989a, 1989b et 1989c (Figures 2, 3 et 4, pour le blé, le colza et le tournesol) sont parfaitement défendables sur d'autres parcelles agronomiques, îlots et/ou sites ; elles pourront néanmoins être éventuellement confirmées, voire améliorée, et cela toujours dans le cadre de la présente invention.

Le prélèvement de la MSPA à titre de diagnostique peuvent eux consister que de feuilles si souhaitable ; il ne s'agit plus à ce stade de déterminer NNI mais seulement les teneurs histologiques élémentaire de la culture en cour d'évaluation.

*Extrapolation d'une fonction azoto - nutritonnelle (FAN) de type x = f(NNI)*

Une fois la fonction établie, il est possible de la projeter jusqu'à NNI $\approx$ 1,00 et de définir ainsi les valeurs NPKCaMg(S) à ce niveau optimal de l'état nutritionnel azoté de la culture. Les ratios a/b normaux peuvent donc ainsi être établis, et plus particulièrement ici selon la méthode DRIS. Pour fin de comparaison j'ai aussi défini de tels ratios a/b à NNI $\approx$ 0,90. Lorsque NNI (*nitrogen nutrition index, alias* indice de nutrition azotée) est égale voire supérieur à une certaine valeur entre 0,800 et 1,200, il est possible de rétro-calculer la teneur histologique élémentaire recherchée à atteindre. Idéalement, j'insiste sur une valeur de NNI $\approx$ 1,00 pour des raisons évidentes. Cela dit, si ce niveau de nutrition azoté n'est pas souhaité, nécessaire ou suffisant, la FAN peut très bien être extrapolée à des valeurs de NNI autres qu'unitaire.

Ces FAN peuvent être décrites mathématiquement via plusieurs types de fonctions polynomiales, avantageusement de degré 2, exponentielles, puissances, logarithmiques, logistiques et/ou non - linéaires, avec asymptotes supérieures et/ou inférieurs. Comme de raison, les fonctions asymptotiques sont les plus réalistes puisque l'augmentation des teneurs histologiques élémentaires ne peut pas progresser continuellement. Cela dit, à ce stade une telle extrapolation quasi linéaire de NNI 0,90 à 1,00 desdites teneurs histologique élémentaires est essentiellement linéaire et défendable.

Ces fonctions azoto - nutritionnelles (FAN) permettent de lier mathématiquement NNI aux teneurs histologiques élémentaires (nutritionnelles) [e], NNI étant lui ici surtout fonction de la MSPA produite ; les données ayant servies à l'établissement des FAN au figures 2, 3 et 4 sont tabulées aux Tableaux 1 (blé), 2 (colza) et 3 (tournesol), respectivement.

**Établissement de teneurs histologiques macro/oligo-élémentaire normales**

Par définition, les indices INNO comme les indices DRIS et CND tendent vers 0,00 lorsqu'on s'approche de l'équilibre nutritionnel. Il s'agit donc d'ajuster les teneurs élémentaires histologiques en respectant à travers la campagne des ratios élémentaires établis lorsque NNI est égale à uen quelconque valeur, voire avantageusement 1. Concrètement, il faut ajuster itérativement ces teneurs élémentaires de manière à ce que les indices INNO tendent, voire atteignent 0,00. Pour éviter si possible des problèmes lors de l'ajustement de ces indices, seuls teneurs élémentaires dotées d'indices négatifs seront ajustées à la hausse ; de tels indices positifs indiquent que les teneurs élémentaires de l'élément correspondant sont trop grandes et qu'il faudrait retirer de ces éléments du feuillage, ce qui est impossible. Il est donc avantageux d'imposer une règle lors de l'ajustement de ces teneurs élémentaires selon laquelle l'ajustement desdits indices ne concerne que les éléments dotés de valeurs négatives ; les teneurs histologiques des éléments a priori dotés d'indices positifs pourront eux rester inchangés.

**Calcul d'indices nutritionnels macro/oligo-élémentaire**

Pour réaliser l'invention il faut donc établir une série de normes a/b de type DRIS, CND, etc., à partir de fonctions de type [e] = f(NNI). Pour ce faire, il est possible d'utiliser des courbes de croissance à travers le temps - généralement des jours post-semis ou juliens, décrivant numériquement l'accumulation de la MSPA (matières sèches des parties aériennes ; t/ha) et la mobilisation d'élémentaire N, P, K, Ca et Mg. J'ai ici utilisé en ce sens les données dites Sadef 1989 pour le blé, le colza et le tournesol. Il est ainsi possible de recalculer les teneurs élémentaires (%-e) N, P, K, Ca et Mg, en divisant les mobilisations (kg-e/ha) par la MSPA (t/ha) ; voir les tableaux 1, 2 et 3, respectivement.

Encore une fois, il est possible d'utiliser pour ce faire, soit des méthodes basées sur l'utilisation de moyennes arithmétiques - *eg.* DRIS (*diagnosis and recommendation integrated system, Bangroo et al. 2010, Akhter et al. 2011),* des moyennes géométriques - *eg.* CND (*compositional nutrient diagnosis,* Khiari et al. 2001a, 2001b, Parent et Dafir 1992), ou encore d'autres méthodes multi-variées (*eg.* Osaki et al. 1996). Dans tous les cas, le CV (coefficient de variation, %) normalement associé à la norme de type a/b est remplacé par la variable dite CVAR ;

$$CVAR = \{(\%R_i^2 - 100)\}^{1/2} + \{(\%R_j^2 - 100)\}^{1/2}$$

où pour $\%R_i^2$, $\%R_j^2$, i et j indiquent les deux coefficients de détermination (%) des susdites n fonctions FAN, x = f(NNI) pour ces deux de n (oligo)éléments en considération (cf. Figures 2, 3 et 4 ces valeurs de $R^2$ pour le blé, le colza et le tournesol, respectivement). CVAR jouera ici le même rôle que CV, en pondérant l'indice rationnel A/B en fonction du coefficient de détermination de ces deux éléments par rapport à NNI ; les éléments peu ou pas déterminés par NNI (i.e. dotés ici de $R^2$ faibles) ne jouant peu ou pas de rôle dans formation de l'indice nutritionnel.

**Établissement des teneurs histologiques élémentaires macro/oligo-élémentaire à atteindre**

A partir de teneurs histologiques élémentaires initiales constatées sur la parcelle de la culture à diagnostiquer, il est possible en appliquant les indices $Ix_n$ dans une habituelle méthode DRIS, par exemple, de mieux identifier les teneurs histologiques à atteindre afin de satisfaire à ces normes rationnelles de type a/b ainsi établie en respectant un certain NNI fixé à l'avance ; voir ici les Tableaux 5 à 7. Or, et tel que déjà mentionné, l'établissement des teneurs histologiques à atteindre est effectué par ajustement réitératif des valeurs des différentes teneurs histologiques élémentaires constatées pour la culture en cour d'élaboration de rendement de manière à rendre lesdits indices nutritionnels ainsi que leur somme égale à 0. Pour éviter des incohérences et/ou des préconisations irréalisables, seules les valeurs des teneurs histologiques élémentaires pour les (oligo)éléments nutritifs affichant des indices nutritionnels négatifs sont ajustées.

Divers algorithmes DRIS existent. Ici, j'ai simplement repris le codage d'une calculatrice DRIS initialement paramétrée pour la canne à sucre (McCray 2011) et implémentée sur Excel™ ; http://erec.ifas.ufl.edu/extension/sugarcane_calculator.shtml. Une fois les novelles valeurs normales, ici fonction directe de NNI, et CVAR substituées, il est possible de réaliser la susdite réitération. Ces nouvelles versions de telles calculatrices DRIS, et CND éventuellement, au choix, sont réalisées pour chaque espèce de manière conventionnelle ; c'est l'utilisation des valeurs normales x = f(NNI) qui est ici en rupture avec les habitudes de l'homme du métier.

**Préconisation des apports marco / oligo - élémentaires à apporter à la culture**

La différence entre ces deux séries de teneurs histologiques élémentaire, constatées et à atteindre ce traduira en apports d'engrais macro- et/ou oligo - élémentaires préconisés. Selon le stade de culture auquel intervenir, l'apport d'engrais est calculé comme le produit de la MSPA et ce différentiel. Plus précisément, la préconisation des apports élémentaires pour atteindre pour les n les susdites teneurs histologiques élémentaires est elle calculée comme suit ;

$$([e]_n - X_n) \cdot MSPA$$

où $[e]_n$ est la teneur histologique élémentaire cible à atteindre établie une fois le susdit ajustement réitératif effectué, $X_n$ est teneur histologique élémentaire constatée que l'on souhaite corrigée un fois le susdit diagnostique établi, et MSPA la matière sèche des parties aériennes, avantageusement exprimée en tonnes par hectare (t/ha). Précisons donc que X est une série A, B, C, etc. jusqu'à Z des n teneurs élémentaires, [e], constatées, et x une série a, b, c etc. jusqu'à z des n teneurs élémentaires dites normales. Ces deux séries de valeurs servent ainsi établir les ratios de type A/B et a/b, et donc les indices $Ix_n$. L'ajustement réitératif à partir des valeurs X constatées de manière à obtenir, ou du moins tendre vers, des valeurs $Ix_n$ égales à 0 va révéler des teneurs histologiques élémentaires cibles, $[e]_n$, à atteindre. Ces $[e]_n$ sont maintenant directement conditionnées par les valeurs de NNI préalablement imposées, voire avantageusement égales à 1,00. L'imposition de cette condition azoto - nutritionnelle remplace la séparation des parcelles références en groupes à hauts et faibles potentiels de rendements, les supposées normes x ayant été caractéristiques des premières.

## APPLICATIONS BIOINDUSTRIELLES ET AGRONOMIQUES

J'ai réalisé trois simulations de diagnostique et de préconisation DRIS, pour le blé, le colza et le tournesol. J'ai pu ainsi comparer les diagnostiques et préconisations des parcelles lorsque NNI est de 0,90 et - strictement, de 1,00 au sens de la présente invention (INNO). Pour ce faire, il s'agit simplement d'extrapoler les FAN jusqu'à NNI 1,00 et relever à ce point les différentes valeurs de [e] pour chacun des éléments nutritifs considérés. Ces deux séries de normes a/b peuvent donc être ainsi comparées aux ratios A/B effectivement observé selon la méthode DRIS.

Ces diagnostiques dit $DRIS_{1,0}$ et $DRIS_{0,9}$ seront nécessairement différents, leur comparaison servant ici à mettre en évidence l'effet de la présente invention (INNO) ; voir en ce sens les ration $DRIS_{1,0}$ / $DRIS_{0,9}$ aux figures 5 (blé), 6 (colza) et 7 (tournesol). Il est aussi possible de simuler ainsi les diagnostiques et préconisations CND (Khiari et al. 2001a/2001b, Parent et Dafir 1992), voire toute autre approche nutritionnelle multi-variée défendable aux yeux de l'homme du métier.

Pour ce trois cultures, les fonctions azoto - nutritionnelles (FAN), soit quadratiques (blé ; figure 2), exponentielles (colza ; figure 3), ou en puissance (tournesol ; figure 4) [e] = f(NNI), où [e] est la teneur histologique de l'élément nutritif (%), et NNI est l'indice de nutrition azotée ; NNI = N/Nc, ont été établie à partir de données existantes. A ce stade j'ai utilisé les données provenant de la Sadef (http://www.sadef.fr/ ; Sadef 1989a, 1989b, 1989c) et depuis publiées, notamment dans Soltner (2005). Bien que ces fonctions soient à ce stade transcendantes, il est loisible de poser comme modèle des fonctions logistiques plus complexes, comportant des asymptotes et/ou des points d'inflexions (eg. Neumann et al. 2004), valeurs analytiques pouvant à terme servir à mieux établir les normes nutritionnelles lorsque NNI est fixé, avantageusement mais pas nécessairement à 1,00.

**Tableau 1 (Blé ; Figure 2)** : Matières sèches des parties aériennes (MSPA), indices de nutrition azotées (NNI) et % d'éléments nutritionnel d'un blé (Sadef, 1989). Les teneurs élémentaires initiales, $X_n$, ayant servies de points de départ pour l'ajustement des indices $INNO_{NPKCaMg}$ sont surlignées ; cf Tableau 8.

| MSPA t/ha | NNI | %N | %P | %K | %Ca | %Mg |
|---|---|---|---|---|---|---|
| 2,46 | 0,840 | 3,02 | 1,26 | 4,62 | 0,721 | 0,247 |
| 3,17 | 0,976 | 3,14 | 1,04 | 4,05 | 0,577 | 0,226 |
| 4,35 | 0,947 | 2,65 | 0,94 | 3,56 | 0,489 | 0,198 |
| 5,02 | 0,897 | 2,35 | 0,92 | 3,27 | 0,462 | 0,177 |
| 6,41 | 0,858 | 2,02 | 0,83 | 3,37 | 0,458 | 0,157 |
| 7,97 | 0,846 | 1,81 | 0,74 | 3,12 | 0,423 | 0,154 |
| 9,49 | 0,884 | 1,75 | 0,69 | 3,24 | 0,468 | 0,170 |
| 10,97 | 0,786 | 1,46 | 0,67 | 2,47 | 0,381 | 0,147 |
| 12,79 | 0,811 | 1,41 | 0,58 | 2,32 | 0,314 | 0,127 |
| 14,69 | 0,664 | 1,08 | 0,53 | 1,97 | 0,315 | 0,125 |
| 17,06 | 0,748 | 1,14 | 0,48 | 1,73 | 0,333 | 0,123 |
| 18,66 | 0,774 | 1,14 | 0,47 | 1,37 | 0,276 | 0,158 |
| 19,67 | 0,684 | 0,98 | 0,45 | 1,32 | 0,291 | 0,125 |

(suite)

| MSPA t/ha | NNI | %N | %P | %K | %Ca | %Mg |
|---|---|---|---|---|---|---|
| 19,45 | 0,797 | 1,15 | 0,47 | 1,03 | 0,264 | 0,145 |
| 18,12 | 0,809 | 1,20 | 0,49 | 1,10 | 0,236 | 0,146 |
| 16,40 | 0,784 | 1,22 | 0,55 | 1,11 | 0,259 | 0,149 |

**Tableau 2 (colza ; Figure 3) :** Matières sèches des parties aériennes (MSPA), indices de nutrition azotées (NNI) et % d'éléments nutritionnel d'un colza (Sadef, 1989). Les teneurs élémentaires initiales ayant servies de points de départ pour l'ajustement des indices INNO$_{NPKCaMgSO3}$ sont surlignées.

| MSPA t/ha | NNI | %N | %P | %K | %Ca | %Mg | %SO3 |
|---|---|---|---|---|---|---|---|
| 0,44 | 0,901 | 4,94 | 1,53 | 3,10 | 2,472 | 0,440 | 2,665 |
| 1,01 | 0,931 | 4,16 | 1,36 | 4,78 | 2,062 | 0,437 | 2,363 |
| 1,71 | 0,814 | 3,19 | 1,21 | 4,56 | 1,960 | 0,386 | 1,726 |
| 2,78 | 0,669 | 2,32 | 1,31 | 5,27 | 2,097 | 0,323 | 1,422 |
| 4,24 | 0,637 | 1,99 | 1,02 | 5,17 | 1,658 | 0,268 | 1,106 |
| 3,81 | 0,829 | 2,66 | 1,15 | 4,53 | 2,152 | 0,320 | 1,220 |
| 4,69 | 0,767 | 2,34 | 1,26 | 4,81 | 2,213 | 0,372 | 1,288 |
| 6,11 | 0,514 | 1,46 | 1,02 | 4,23 | 1,690 | 0,260 | 1,308 |
| 7,69 | 0,500 | 1,34 | 0,99 | 3,46 | 1,560 | 0,257 | 0,916 |
| 8,53 | 0,541 | 1,42 | 1,06 | 3,99 | 2,008 | 0,288 | 1,178 |
| 8,14 | 0,572 | 1,52 | 1,02 | 3,36 | 1,842 | 0,287 | 1,064 |
| 8,82 | 0,506 | 1,32 | 0,92 | 3,39 | 2,218 | 0,303 | 1,186 |
| 9,03 | 0,495 | 1,28 | 0,89 | 2,71 | 1,993 | 0,282 | 1,070 |
| 10,80 | 0,469 | 1,16 | 0,82 | 2,92 | 2,330 | 0,286 | 1,128 |
| 9,87 | 0,457 | 1,15 | 0,86 | 2,57 | 2,542 | 0,288 | 1,202 |
| 8,14 | 0,646 | 1,71 | 0,70 | 2,54 | 2,439 | 0,276 | 1,124 |
| 9,07 | 0,587 | 1,52 | 0,77 | 2,51 | 2,265 | 0,289 | 1,134 |

**Tableau 3 (tournesol ; Figure 4) :** Matières sèches des parties aériennes (MSPA), indices de nutrition azotées (NNI) et % d'éléments nutritionnel d'un tournesol (Sadef, 1989). Les teneurs élémentaires initiales ayant servies de points de départ pour l'ajustement des indices INNO$^{NPKCaMg}$ sont surlignées.

| MSPA t/ha | NNI | %N | %P | %K | %Ca | %Mg |
|---|---|---|---|---|---|---|
| 0,78 | 0,624 | 3,51 | 0,81 | 7,74 | 1,716 | 0,516 |
| 2,02 | 0,793 | 2,91 | 0,46 | 7,29 | 1,474 | 0,473 |
| 3,57 | 0,948 | 2,70 | 0,77 | 6,81 | 1,469 | 0,454 |
| 6,68 | 0,831 | 1,79 | 0,81 | 5,98 | 1,655 | 0,513 |
| 8,78 | 0,786 | 1,50 | 0,71 | 5,20 | 1,716 | 0,512 |
| 10,72 | 0,713 | 1,24 | 0,67 | 4,44 | 1,727 | 0,515 |
| 11,65 | 0,563 | 0,94 | 0,58 | 3,91 | 1,568 | 0,466 |
| 13,90 | 0,677 | 1,05 | 0,60 | 3,88 | 1,720 | 0,488 |
| 13,05 | 0,668 | 1,07 | 0,63 | 3,81 | 1,736 | 0,503 |
| 15,15 | 0,709 | 1,06 | 0,62 | 3,81 | 1,796 | 0,486 |
| 14,76 | 0,727 | 1,10 | 0,68 | 3,82 | 1,801 | 0,479 |
| 12,89 | 0,676 | 1,09 | 0,65 | 3,64 | 1,786 | 0,457 |

Dans un premier temps, j'ai donc développé pour diverses cultures, y compris ici le blé, le colza et le tournesol, ces fonctions azoto - nutritionnelles (FAN) [e] = f(NNI) pour l'azote (N), le phosphore (P), le potassium (K), le calcium (Ca), le magnésium (Mg), et - dans le cas du colza, du soufre (S). J'ai par la suite proposé une analyse végétale NPKCaMg(S), et à partir de celle-ci modulé les valeurs NPKCaMg me manière à optimiser les ratios A/B comparables au ratios a/b selon la méthode DRIS. Une fois les indices DRIS pour chacun des éléments nutritifs nuls (0,0), l'état nutritionnel de la culture est jugé optimale. Les valeurs NPKCaMg(S) à ce stade seront donc nécessairement différentes selon que les normes a/b respectent soit NNI 1,00 ou 0,90 ; la comparaison de ces valeurs permettra d'apprécier l'effet de la présente invention sur de tels diagnostics multivariés de l'état nutritionnel des cultures (*cf.* Tableau 4). Concrètement, il faut établir les différents ratios a/b à partir des valeurs aux Tableaux 4 (*cf.* Tableaux 5 (blé), 6 (colza) et 7 (tournesol), et cela lorsque NNI = 0,90 et 1,00.

**Tableau 4 :** Teneurs histologique ([e], %) des principaux éléments nutritifs du blé, du colza et du tournesol lorsque les fonctions [e] = f(NNI) aux figures 2, 3 et 4, respectivement, sont extrapolées à NNI = 1,00 et 0,90.

|  | -------- blé -------- | | -------- colza -------- | | -------- tournesol -------- | |
|---|---|---|---|---|---|---|
| [e], % | si NNI 1,00 | si NNI 0,90 | NNI = 1,00 | NNI = 0,90 | NNI = 1,00 | NNI = 0,90 |
| N | 3,501 | 2,174 | 5,144 | 3,898 | 2,841 | 2,116 |
| P2O5 | 1,180 | 0,812 | 1,484 | 1,341 | 0,857 | 0,781 |
| K2O | 4,867 | 3,074 | 4,899 | 4,514 | 7,325 | 6,079 |
| CaO | 0,647 | 0,445 | 2,194 | 2,159 | 1,533 | 1,584 |
| MgO | 0,234 | 0,178 | 0,438 | 0,399 | 0,480 | 0,483 |
| SO3 | na | na | 2,185 | 1,894 | na | na |

**Tableau 5 (blé)** : Ratios nutritionnels normales a/b pour le blé si les fonctions [e] = f(NNI) à la Figure 2 sont projetées à NNI = 0,90 et 1,00

| NNI = 0,90 | N | P2O5 | K2O | CaO | MgO |
|---|---|---|---|---|---|
| N | 1,0 | 0,374 | 1,414 | 0,205 | 0,082 |
| P2O5 | 2,677 | 1,0 | 3,786 | 0,547 | 0,219 |
| K2O | 0,707 | 0,264 | 1,0 | 0,145 | 0,058 |
| CaO | 4,890 | 1,827 | 6,915 | 1,0 | 0,401 |
| MgO | 12,20 | 4,56 | 17,26 | 2,496 | 1,0 |
| NNI = 1,00 | N | P2O5 | K2O | CaO | MgO |
| N | 1,0 | 0,337 | 1,390 | 0,185 | 0,067 |
| P2O5 | 2,967 | 1,0 | 4,125 | 0,548 | 0,198 |
| K2O | 0,719 | 0,242 | 1,0 | 0,133 | 0,048 |
| CaO | 5,411 | 1,824 | 7,522 | 1,0 | 0,361 |
| MgO | 14,97 | 5,05 | 20,82 | 2,767 | 1,0 |

**Tableau 6 (colza)** : Ratios nutritionnels normales a/b pour le colza si les fonctions [e] = f(NNI) à la Figure 3 sont projetées à NNI = 0,90 et 1,00

| NNI = 0,90 | N | P2O5 | K2O | CaO | MgO | SO3 |
|---|---|---|---|---|---|---|
| N | 1,000 | 0,344 | 1,158 | 0,554 | 0,102 | 0,486 |
| P2O5 | 2,906 | 1,000 | 3,365 | 1,609 | 0,297 | 1,412 |
| K2O | 0,864 | 0,297 | 1,000 | 0,478 | 0,088 | 0,420 |
| CaO | 1,806 | 0,621 | 2,091 | 1,000 | 0,185 | 0,877 |
| MgO | 9,782 | 3,366 | 11,325 | 5,417 | 1,000 | 4,752 |
| SO3 | 2,058 | 0,708 | 2.383 | 1,140 | 0,210 | 1,000 |
| NNI = 1,00 | N | P2O5 | K2O | CaO | MgO | SO3 |
| N | 1,000 | 0,288 | 0,952 | 0,427 | 0,085 | 0,425 |
| P2O5 | 3,467 | 1,000 | 3,302 | 1,479 | 0,295 | 1,473 |
| K2O | 1,050 | 0,303 | 1,000 | 0,448 | 0,089 | 0,446 |
| CaO | 2,345 | 0,676 | 2,233 | 1,000 | 0,200 | 0,996 |
| MgO | 11,744 | 3,387 | 11,183 | 5,009 | 1,000 | 4,988 |

(suite)

| NNI = 1,00 | N | P2O5 | K2O | CaO | MgO | SO3 |
|---|---|---|---|---|---|---|
| SO3 | 2,355 | 0,679 | 2,242 | 1,004 | 0,200 | 1,000 |

Ce sont ces ratios élémentaires qui, une fois intégrés au calcul des indices DRIS permettent de diagnostiquer l'état nutritionnel putatif, i.e. lorsque NNI = 0,90. Il faut donc dans un premier temps optimiser le calcul des l'indices DRIS lorsque NNI = 0,90 en ajustant les valeurs de N, P, K, Ca et Mg (et S pour le colza), de manière à ce que chacun de ces indices soit approximativement égale 0,0. Une fois cette première optimisation effectuée, les valeurs N, P, K, Ca et Mg sont transposées au calcule des indices DRIS lorsque NNI = 1,00 ; les normes a/b étant différentes de celles lorsque NNI = 0,90, les valeurs de N, P, K, Ca et Mg optimales ainsi obtenues lorsque chacun des indices DRIS ≈ 0,0 seront nécessairement différentes. Ici, c'est les ratios DRIS1,00 / DRIS0,90 pour chacune des éléments nutritionnels qui illustrera l'utilité d'adopter systématiquement l'ajustement à NNI = 1,00 lors de l'établissement de normes a/b de ce type.

**Tableau 7 (tournesol)** : Ratios nutritionnels normales a/b pour le tournesol si les fonctions [e] = f(NNI) à la Figure 4 sont projetées à NNI = 0,90 et 1,00

| NNI = 0,90 | N | P2O5 | K2O | CaO | MgO |
|---|---|---|---|---|---|
| N | 1,0 | 0,369 | 2,873 | 0,749 | 0,228 |
| P2O5 | 2,708 | 1,0 | 7,780 | 2,027 | 0,618 |
| K2O | 0,348 | 0,129 | 1,0 | 0,261 | 0,079 |
| CaO | 1,336 | 0,493 | 3,838 | 1,0 | 0,305 |
| MgO | 4,38 | 1,62 | 12,59 | 3,280 | 1,0 |
| NNI = 1,00 | N | P2O5 | K2O | CaO | MgO |
| N | 1,0 | 0,302 | 2,579 | 0,540 | 0,169 |
| P2O5 | 3,315 | 1,0 | 8,547 | 1,789 | 0,560 |
| K2O | 0,388 | 0,117 | 1,0 | 0,209 | 0,066 |
| CaO | 1,853 | 0,559 | 4,777 | 1,0 | 0,313 |
| MgO | 5,92 | 1,79 | 15,26 | 3,194 | 1,0 |

En ce sens, l'utilité de l'invention est appréciable par la comparaison des teneurs optimales (%) des principaux éléments nutritionnels selon DRIS dont les normes a/b satisfassent ou non NNI = 1,00 présentée au Tableau 8. J'ai représenté graphiquement ces comparaisons aux Figures 5 (blé), 6 (colza) et 7 (tournesol). Dans les cas du blé (Figure 5) et du tournesol (Figure 7), l'interaction NK est apparente ; l'ajustement systématique des normes a/b DRIS à NNI = 1,00 implique une augmentation des teneurs histologiques de N et K, et une certaine réduction de celles des P, du Ca et du Mg. Dans le cas du colza (Figure 6), c'est plutôt une interaction NS qui apparaît ; outre celle du Ca, les teneurs histologiques des autres éléments nutritionnels peuvent elles rester stables.

**Tableau 8 :** Teneurs histologiques ($[e]_n$, %) optimales et initialement constatées ($X_n$) des principaux éléments nutritionnels selon DRIS dont les normes a/b satisfassent NNI = 0,90 et 1,00 pour le blé, le colza et le tournesol.

| $[e]_n$, % | culture | NNI | MSPA (t/ha) | stade BBCH | $X_n$ | $[e]_n$ : NNI=0,90 | $[e]_n$ : NNI=1,00 |
|---|---|---|---|---|---|---|---|
| N | blé | 0,858 | 6,41 | 34-35 | 2,20 | 2,373 | 2,470 |
| P | blé | 0,858 | 6,41 | 34-35 | 0,83 | 0,886 | 0,833 |
| K | blé | 0,858 | 6,41 | 34-35 | 3,34 | 3,370 | 3,430 |
| Ca | blé | 0,858 | 6,41 | 34-35 | 0,46 | 0,485 | 0,458 |
| Mg | blé | 0,858 | 6,41 | 34-35 | 0,16 | 0,195 | 0,165 |
| S | na | na | na | na | na | na | na |
| N | colza | 0,829 | 3,81 | 34-35 | 2,66 | 3,600 | 4,500 |
| P | colza | 0,829 | 3,81 | 34-35 | 1,15 | 1,250 | 1,300 |
| K | colza | 0,829 | 3,81 | 34-35 | 4,53 | 4,530 | 4,530 |

(suite)

| [e]ₙ, % | culture | NNI | MSPA (t/ha) | stade BBCH | Xₙ | [e]ₙ : NNI=0,90 | [e]ₙ : NNI=1,00 |
|---|---|---|---|---|---|---|---|
| Ca | colza | 0,829 | 3,81 | 34-35 | 2,152 | 2,152 | 2,152 |
| Mg | colza | 0,829 | 3,81 | 34-35 | 0,32 | 0,360 | 0,380 |
| S | colza | 0,829 | 3,81 | 34-35 | 1,22 | 1,750 | 1,900 |
| N | tournesol | 0,831 | 6,68 | 35-36 | 1,79 | 2,300 | 2,900 |
| P | tournesol | 0,831 | 6,68 | 35-36 | 0,81 | 0,810 | 0,810 |
| K | tournesol | 0,831 | 6,68 | 35-36 | 5,98 | 6,500 | 7,500 |
| Ca | tournesol | 0,831 | 6,68 | 35-36 | 1,655 | 1,700 | 1,655 |
| Mg | tournesol | 0,831 | 6,68 | 35-36 | 0,513 | 0,580 | 0,550 |
| S | na | na | na | na | na | na | na |

Ces préconisations d'apports d'engrais sont le plus souvent réalisables par de simples applications foliaires d'engrais N, P, K, Ca et/ou Mg (et/ou $SO_3$ pour le colza). En effet, dans le cas du blé (Tableau 8, Figure 5), une augmentation du K histologique préconisé de 3,37 à 3,43% au stades BBCH 47-49 comportant environ 5 t/ha de MSPA représente un besoin d'apport de l'ordre de 2,5 kg de K par hectare, soit environ 3 L d'un engrais foliaire K titrant 500 g-$K_2O$ / L (eg. Cigo-K Xpress™ ; Agronutrition SAS, France). Ce type de produit est effectivement applicable sur grandes cultures à hauteur de 3-4 L/ha en 3 à 5 applications sur feuillage suffisamment développé. La présente invention apporterait donc ici une justification à ce type de fertilisation foliaire NK (i.e. Cigo-K Xpress™ contient aussi 50 g/L d'azote) ; un diagnostique non ajusté pour NNI = 1,00 aurait lui probablement proposé l'impasse considérant qu'en l'état cet apport de K est superflue.

Le diagnostique de l'état nutritionnel à l'aide de tels indices ajustés selon NNI pourra donc souvent augmenter teneurs histologiques en N préconisées, mais aussi parfois réduire celles en P, K, Ca, Mg, voire SO3 (cf. colza). Prenons un exemple simple, soit ici celui du blé Sadef 1989. Les besoins (apports) en N, P, K, Ca et Mg sont rapportés à la Figure 8 ; les besoins en P, K, Ca et Mg sont modérés et peuvent donc être facilement comblés à l'aide d'engrais foliaires. Les besoins en N sont par contre eux ici beaucoup plus importants, soit de l'ordre de 80 kg-N / ha, mais néanmoins cohérents et révélateurs. En effet, ce blé Sadef 1989 reçu 189 UN (kg-N/ha) et en exporta dans 8 800 kg/ha grain 140, soit un coefficient d'utilisation apparente de l'ordre de 75%. Cela dit, cette teneur en N des grains se traduit par une teneur en protéine d'a peine 10% (140 / 8 000 x 6,57 = 10,4), bien inférieure aux 12,5% recherchés pour des blés panifiables. Pour atteindre 12,5% de protéine il aurait donc ici fallut apporter -80 UN de plus, obtenir 5% de rendement en plus (~9 300 kg/ha) et, en supposant un coefficient d'utilisation apparente maintenant d'au plus 50% pour cet apport additionnel, exporter dans les grains 180 kg-N pour 93 quintaux, soit un taux de protéine d'environs 12,7%. Pour faire simple, disons que ce blé supposément à haut rendement et nettement carencé en N, et que pour y remédier rien ne sert d'augmenter P et Ca comme le préconiserait un diagnostique de l'état nutritionnel sans l'utilisation de l'indices $Ix_{NPKCaMg}$ respectant ici NNI = 1,00.

Pour le blé, l'importance des éventuelles surdoses d'azote (N) en comparaison à celles de potassium (K), magnésium (Mg), ou voire encore des éventuelle "sous - doses" (impasses) de phosphore (P) et de calcium (Ca ; Figures 8). Or, en terme élémentaire et pondéral le phosphore, le calcium et le magnésium ne représentent généralement que 1/6, 1/7 voire 1/15, respectivement des teneurs (%) d'azote et/ou de potassium du blé d'hiver. Idem pour les mobilisations (kg/ha) de P, Ca et Mg qui elle ne représentent généralement que 1/3, 1/5, voire 1/10 de celles de l'azote et/ou du potassium. Il est donc normal qu'ici les variations en P, K, Ca et Mg soient apparemment petites par rapport à celles du N (Figure 8). Elles ne sont cependant pas négligeables est parfaitement en accords avec les doses préconisées via des produits d'Agronutrition SAS (Carbonne, France). Par exemple, les besoins au sens d'INNO à combler si NNI = 1,00 sont de l'ordre de 500 g. Or, un produit Agronutrition SAS tel que Fixa-Mg™ titrant environs 72 g-K/L et appliqué à 8 L/ha apporte lui donc 580-g/ha, soit environs ce que préconise ici INNO à titre de surdose d'Mg si NNI = 1,00. A noter que cet apport d'une dose de Fixa-Mg™ serait autrement très difficilement *préconisable* sur la seule base de valeurs critiques du Mg, valeurs qui pour l'essentiel n'existent pas pour cet élément. De plus, ne pas ajuster les indices Ixn pour NNI = 1 nécessiterait ici des apports de Mg de l'ordre de 4 000 g/ha, beaucoup plus difficilement gérables.

*Sigles et définitions*

[e]$_n$ ; teneur histologique pour l'élément nutritif n à atteindre (cible)

x$_n$ : teneur histologique pour l'élément nutritif n normale

X$_n$ : teneur histologique pour l'élément nutritif n constatée

x : série des n teneurs histologiques normales (calculées)

X : série des n teneurs histologiques constatées (diagnostiquées)

**MSPA :** matière sèche des parties aériennes (t/ha, kg/ha)

**Nc :** azote critique (%)

**FAN :** fonction azoto - nutritionnel

**NNI** : *nitrogen nutrition index* (indice de nutrition azotée ; INN)

**PNI** : phosphorus nutrition index (indice de nutrition phosphatée ; INP)

**KNI** : potassium nutrition index (indice de nutrition potassique ; INK)

**DRIS** : *diagnosis and recommendation integrated system*

**CND :** *compositional nutrient diagnosis*

**Comifer** : comité français d'étude et de développement de la fertilisation raisonnée

*Références, bibliographie et brevets pertinents*

Agnusdei, MG et al. 2010. Critical N concentration can vary with growth conditions in forage grasses: implications for plant N status assessment and N deficiency diagnosis. Nutr. Cycl. Agroecosyst. 88 (2) : 215-230,

Akhter, N. 2011. Comparison of DRIS and critical level approach for evaluating nutrition status of wheat in District Hyderabad, Pakistan . Inaugural-Dissertation, zur Erlangung des Grades Doktor der Agrarwissenschaften (Dr. agr.), Rheinischen Friedrich-Wilhelms-Universität, Bonn (Germany)

Bangroo, S.A., M.I. Bhat, Tahir Ali, Aziz M.A., M.A. Bhat et Mushtaq A. Wani. 2010. Diagnosis and Recommendation Integrated System (DRIS). International J. Curr. Res. 10 : 084-097

Colnenne, C, JM Meynard, R Reau, E Justes et A Merrien. 1998. Determination of a critical nitrogen dilution curve for winter oilseed rape. Ann. Bot. 81 : 311-317

Farrugia, A, L Thélier-Huché, S Violleau, JM Lebrun et A Besnard. 2000. L'Analyse d'herbe pour piloter la fertilisation phosphatée et potassique des prairies : exemples d'application de la méthode. Fourrages 164 : 447-459.

Gastal, F et G Lemaire. 2002. N uptake and distribution in crops : an agronomical and ecophysiological perspective. J. Exp. Bot. 53 : 789-799

Huett, DO et al. 1991. Determination of critical nitrogen concentrations of zucchini squash cucurbita pepo I. cultivar blackjack grown in sand culture", Austl. J. Exp. Agric. 31(6) pages 835-842,

Jeuffroy, MH, B Ney et A Ourry. 2002. Integrated physiological and agronomic modelling of N capture and use within the plant. J. Exp. Bot. 53 : 809-823

Jouany, C, P, Cruz et JP Theau. 2005. Diagnostique du statut de nutrition phosphatée et potassique des prairies naturelles en présence de légumineuses. Fourrages 184, 547-555

Jouany, C., P Cruz, P Petibon et M. Duru. 2004. Diagnosing phosphorus status of natural grassland in the presence of white clover. Europ. J. Agron. 21; 273-285

Justes, E, B. Mary, JM Meynard, JM Machet et L. Thélier-Huché. 1994. Determination of a critical nitrogen dilution curve for winter wheat crops, Ann. Bot. 74 ; 397-407.

Khiari, L., LE Parent et N. Tremblay. 2001a. The Phosphorus Compositional Nutrient Diagnosis Range for Potato. Agron. J. 93:815-819

Khiari, L, LE Parent et Nicolas Tremblay. 2001b. Critical Compositional Nutrient Indexes for Sweet Corn at Early Growth Stage. Agron. J. 93:809-814

Leibisch, F. 2011. Plant and soil indicators to assess the phosphorus nutrition status of agricultural grasslands. Ph.D. (Doctor of Sciences) Thesis, ETH, Zurich, Germany.

Lemaire, G, E van Oosterom, MH Jeuffroy, F Gastal et A Massignam. 2008. Crop species present different qualitative types of response to N deficiency during their vegetative growth. Field Crop Res. 105 : 253-265.

McCray, M. 2011. Sugarcane DRIS Calculator. Everglades research and education center. 3200 E Palm Beach Rd. Belle Glade, FL 33430 (561) 993-1518 jmmccray@ufl.edu

Marino, MA, A Mazzanti, SG Assuero, F Gastal, HE Echeverria et F Andrade. 2004. Nitrogen dilution curves and nitrogen use efficiency during winter-spring growth of annual ryegrass. Agron. J. 96 : 601-607

Neumann, S, ND. Paveley, FD. Beed et R. Sylvester-Bradley. 2004. Nitrogen per unit leaf area affects the upper asymptote of Puccinia striiformis f.sp. tritici epidemics in winter wheat. Plant Pathol. 53, 725-732

Osaki et al. 1996. Carbon-nitrogen interaction related to P, K, Ca and Mg nutrients in field crops. Soil Sci. Plant. Nutr. 43(3): 539-552

Plénet, D, et G Lemaire. 2000. Relationships between dynamics of nitrogen uptake and dry matter accumulation in maize crops ; determination of critical N concentration. Plant and Soil 216: 65-82.

Parent, LE, et M. Dafir. 1992. A Theoretical Concept of Compositional Nutrient Diagnosis. J. Amer. Soc. Hort. Sci. 117:239-242

Sadef 1989a. Le blé. Service d'expérimentation. Centre de recherche 68700 Apach (France).

Sadef 1989b. Le colza. Service d'expérimentation. Centre de recherche 68700 Apach (France).

Sadef 1989c. Le tournesol. Service d'expérimentation. Centre de recherche 68700 Apach (France).

Salette, J et L. Huché. 1991. Diagnostic de l'état de nutrition minérale d'une prairie par l'analyse du végétal ; principes, mise en oeuvre, exemples. Fourrages 125, 3-18

Seassau C, G Dechamp-Guillaume, E Mestries et P Debaeke. 2010. Nitrogen and water management can limit premature ripening of sunflower induced by Phoma macdonaldii. Field Crops Res. 115: 99-106

Silveira CP, GR Nachtigall, et FA Monteiro. 2005. Norms for the diagnosis and recommendation integrated system for signal grass. Sci. Agric. (Brazil) 62(6) : 513-519.

Soltner, D. 2005. Les grandes productions végétales (20ième édition). Collections Sciences et Techniques Agricoles, Bressuire Cedex, France (www.soltner.fr)

Thélier-Huché, L, A Farrugia et P Castillon. 1999. L'analyse d'herbe, un outil pour le pilotage de la fertilisation phosphatée et potassique des praires naturelles et temporaires. Institut de l'Élevage, ITCF, INRA, ACTA, Chambres d'Agriculture, COMIFER.

Ziadi, N, G Bélanger, AN Cambouris, N Tremblay, MC Nolin et A Claessens. 2008. Relationship between phosphorus and nitrogen concentrations in spring wheat. Agron. J. 100(1) : 80-86.

## Revendications

1. Méthode de diagnostique multi-variée de l'état nutritionnel d'une culture et de préconisation des apports élémentaires à effectuer pour optimiser cet état nutritionnel comportant les étapes suivantes ;

   • le prélèvement des matières sèches des parties aériennes et la détermination de leurs n teneurs histologiques élémentaire, X, en macroéléments nutritifs choisis parmi un groupe comprenant N, P, K, Ca, Mg, et/ou S, voire Na, et/ou en oligoéléments nutritifs choisis parmi un group comprenant Fe, Mn, Zn, Cu, B, Mo, Cl, Si et/ou Co ;
   • l'établissement de teneurs histologiques normales, $x_n$, pour chacun des n susdites éléments nutritifs considérés ;
   • par rapport à ces n valeurs normales $x_n$, le calcul d'indices nutritionnels, $Ix_n$, pour chacun des n susdits éléments nutritifs par comparaisons multiples de ratios nutritionnels fondées sur le calcul de moyennes arithmétiques telles que les approches dites DRIS *(diagnosis and recommendation integrated system),* sur le calcul de moyennes géométriques telles que CND *(compositional nutrient diagnosis)*, ou encore toutes autre méthode multi-variée prenant en compte l'interactions des susdits éléments nutritifs, l'age et/ou la production de matières sèches de la culture à un stade donné ;
   • en fonction des susdits indices nutritionnels, l'établissement des teneurs histologiques élémentaires à atteindre pour chacun des susdits éléments nutritifs ;
   • en fonction des susdites teneurs histologiques élémentaires à atteindre pour chacune des susdits éléments, la préconisation des apports élémentaires à apporter à la culture pour ainsi en optimiser l'état nutritionnel en terme d'absence de carences et/ou de déséquilibre nutritionnel ;

   **caractérisée en ce que** ;

   • les n valeurs normales $x_n$ sont déterminées par extrapolation d'une *fonction azoto - nutritionnelle* (FAN) de type $x_n = f(NNI)$ lorsque NNI *(nitrogen nutrition index, alias* indice de nutrition azotée) est égale voire supérieur à une certaine valeur entre 0,90 et 1,10, soit de 1,00 +/- 0,10 ;
   • ladite FAN est décrite mathématiquement selon un fonction choisie parmi un group comprenant des fonctions polynomiales, avantageusement de degré 2, exponentielles, puissances, logarithmiques, voire logistiques et/ou non - linéaires comprenant des asymptotes supérieures et/ou inférieurs.

2. Méthode de diagnostique multi-variée de l'état nutritionnel d'une culture et de préconisation des apports élémentaires à effectuer pour optimiser cet état nutritionnel selon la première revendication **caractérisée en ce que** les valeurs normales $x_n$ sont déterminées par extrapolation d'une *fonction azoto - nutritonnelle* (FAN) de type $x_n = f(NNI)$ lorsque NNI *(nitrogen nutrition index, alias* indice de nutrition azotée) est égale voire supérieur à 1.

**3.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** le calcul d'indices nutritionnels, $Ix_n$, pour chacun de ces n éléments nutritifs est effectuée comme suit à l'aide de moyennes arithmétiques ;

$$Ix_A = (f(A/B) + f(A/C) + f(A/D) ... + f(A/Z)) / n-1,$$

$$Ix_B = (-f(A/B) + f(B/C) + f(B/D) ... + f(B/Z)) / n-1,$$

$$Ix_C = (-f(A/C) - f(B/C) + f(C/D) ... + f(C/Z)) / n-1,$$

$$.$$
$$.$$
$$.$$

$$Ix_Z = (-f(A/Z) - f(B/Z) - f(C/Z) ... - f(Y/Z)) / n-1$$

où n est le nombre d'éléments nutritifs en considération, et A, B, C etc. jusqu'à Z une série de n teneurs histologiques, $X_n$, de ces n (oligo)éléments nutritifs telle que proposée ici à la première revendication et établies à un stade de développement donné, et la comparaison de chaque indice A/B, A/C, A/D, etc., à un ratio normal correspondant a/b, a/c, a/d, etc., permettant de constater des écarts appréciables comme suit ;

si A/B est plus grande ou égale à a/b, donc -

$$f(A/B) = [\{(A/B) / (a/b)\} - 1] \times (1000/CV)$$

si A/B est plus petit que a/b, donc -

$$f(A/B) = [1 - \{(A/B) / (a/b)\}] \times (1000/CV)$$

lorsque a, b, c etc. jusqu'à z sont les valeurs normales, x, pour ces mêmes n (oligo)éléments ainsi déterminées par extrapolation d'une *fonction azoto - nutritonnelle* (FAN) de type $x_n = f(NNI)$ lorsque NNI est égale voire supérieur à 1,00, et CV le coefficient de variation associé avec la norme rationnelle de type a/b, a/c, etc.

**4.** Méthode de diagnostique multi-variée de l'état nutritionnel d'une culture et de préconisation des apports élémentaires à effectuer pour optimiser cet état nutritionnel selon la première revendication **caractérisée en ce que** le calcul d'indices nutritionnel, $Ix_n$, pour chacun des n (oligo)éléments ce fait comme suit à l'aide de moyennes géométriques ;

$$Ix_n = ( 1/Sx_n ) \times ( \log(X_n / g(X)) - \log(x_n / g(x)) )$$

où g(X) et g(x) sont respectivement les moyennes géométriques des teneurs histologiques des n (oligo)éléments nutritifs (i) mesurées sur la culture en cour de diagnostique (g(X)) et (ii) normales déterminées par extrapolation d'une *fonction azoto - nutritonnelle* (FAN) de type $x_n = f(NNI)$ lorsque NNI (*nitrogen nutrition index, alias* indice de nutrition azotée) est égale voire supérieur à 1,00, tandis que $Sx_D$ est la racine carrée du coefficient de variation (CV) autrement utilisé dans le calcul des indices DRIS, à savoir le CV le coefficient de variation associé avec la norme rationnelle de type a/b, a/c, etc., et enfin $X_n$ et $X_n$ sont les teneurs histologiques élémentaires pour chacun des n (oligo)éléments en considération.

**5.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** le CV (coefficient de variation, %) normalement associé à la norme de type a/b est remplacé par la variable dite CVAR ;

$$CVAR = \{(\%R_i{}^2 - 100)\}^{1/2} + \{(\%R_j{}^2 - 100)\}^{1/2}$$

où pour $\%R_i{}^2$, $\%R_j{}^2$, i et j indiquent les deux coefficients de détermination (%) des susdites n fonctions FAN, $x_n = f(NNI)$ pour ces deux de n (oligo)éléments en considération.

**6.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** l'écart de chacun des indices par rapport à 0 indique une déséquilibre des teneurs de l'(oligo)élément nutritionnel par rapport aux autres n-1 (oligo)éléments considérés, un indice nutritionnel négatif révélant ici une carence relative et un indices nutritionnel positif révélant un excès relatif de l'(oligo)éléments nutritif en question.

**7.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** la somme des indices nutritionnels pour les n (oligo)éléments considérés doit égaler 0 pour qu'un diagnostique d'équilibre nutritionnel soit établi.

**8.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** l'établissement des teneurs histologiques à atteindre est effectué par ajustement réitératif des valeurs des différentes teneurs histologiques élémentaires constatées pour la culture en cour d'élaboration de rendement de manière à rendre lesdits indices nutritionnels ainsi que leur somme égale à 0.

**9.** Méthode de diagnostique multi-variée de l'état nutritionnel d'une culture et de préconisation des apports élémentaires à effectuer pour optimiser cet état nutritionnel selon la revendication précédente **caractérisée en ce que** seules les valeurs des teneurs histologiques élémentaires pour les (oligo)éléments nutritifs affichant des indices nutritionnels négatifs sont ajustés.

**10.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** la préconisation des apports élémentaires pour atteindre pour les n les susdites teneurs histologiques élémentaires est elle calculée comme suit ;

$$([e]_n - X_n) \times MSPA$$

où $[e]_n$ est la teneur histologique élémentaire cible à atteindre établie une fois le susdit ajustement réitératif effectué, $X_n$ est teneur histologique élémentaire constatée que l'on souhaite corrigée un fois le susdit diagnostique établi, et MSPA la matière sèche des parties aériennes, avantageusement exprimée en tonnes par hectare (t/ha).

**11.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** le prélèvement des matières sèches des parties aériennes pour la susdite détermination de leurs n teneurs histologiques élémentaire en macroéléments nutritifs et/ou oligoéléments est effectué entre ou aux stades de développement dits BBCH 31 et 69, plus particulièrement entre ou aux stades BBCH 35 et 61, et avantageusement entre ou aux stades BBCH 39 et 55.

**12.** Méthode de diagnostique multi-variée de l'état nutritionnel d'une culture et de préconisation des apports élémentaires à effectuer pour optimiser cet état nutritionnel selon une quelconque des revendications précédentes **caractérisée en ce que** les matières sèches des parties aériennes pour la susdite détermination de leurs n teneurs histologiques élémentaire en macroéléments nutritifs et/ou oligoéléments comprennent que le feuillage, plus particulièrement le feuillage et les inflorescences, voire plus avantageusement l'ensemble de la biomasse aérienne comprenant les tiges, les inflorescences, le feuillage et, le cas échéant, les fruits, y compris donc les grains, en formation.

**13.** Méthode de diagnostique multivariée de l'état nutritionnel d'une culture et de préconisation des apports élémentaires à effectuer pour optimiser cet état nutritionnel selon une quelconque des revendications précédentes **caractérisée en ce que** la culture est une culture agronomique, maraîchère, arboricole, viticole ou horticole.

**14.** Méthode de diagnostique multivariée de l'état nutritionnel d'une culture et de préconisation des apports élémentaires à effectuer pour optimiser cet état nutritionnel selon la revendication précédente **caractérisée en ce que** la culture agronomique, maraîchère, arboricole ou horticole choisie parmi un groupe comprenant les grandes cultures telles que le blé, le colza et l'orge, notamment d'hiver, le maïs et la sorgho, les cultures fourragères, notamment non *Fabaceae* telles que le raygras (*Lolium* spp.), ainsi que des cultures maraîchères telles que la tomate, la laitue et la fraise, , la vigne (*Vitis vinifera*), voire des cultures horticoles telles que les bégonias ou toutes autre fleurs en pot ou coupé, ainsi que les culture arboricoles telles que la pomme, l'abricot ou la poire.

**Patentansprüche**

1. Methode zur multivariaten Diagnose des Ernährungszustandes einer Pflanzenkultur und zur Empfehlung der zur Optimierung dieses Ernährungszustandes vorzunehmenden Zufuhr von Elementen, die die folgenden Schritte umfasst:

   • die Probenahme von Trockenmasse aus den oberirdischen Teilen und die Bestimmung ihrer n histologischen Elementgehalte, X, als Makronährstoffe, ausgewählt aus einer Gruppe, die N, P, K, Ca, Mg und/oder S oder sogar Na umfasst, und/oder in Spurenelementen für die Ernährung, ausgewählt aus einer Gruppe, die Fe, Mn, Zn, Cu, B, Mo, Cl, Si und/oder Co beinhaltet:
   • die Festlegung normaler histologischer Werte, $x_n$, für jedes der n betrachteten, obengenannten Elemente für die Ernährung:
   • in Bezug auf diese n Normalwerte, $x_n$, die Berechnung von Nährstoffindizes, $Ix_n$, für jeden der genannten n Nährstoffe durch multiple Vergleiche von Nährstoffverhältnissen auf der Grundlage der Berechnung von arithmetischen Mitteln wie DRIS-Ansätzen ((*diagnosis and recommendation integrated system*), der Berechnung von geometrischen Mitteln wie CND (*compositional nutrient diagnosis*) oder jeder anderen multivariaten Methode unter Berücksichtigung der Wechselwirkungen der genannten Nährstoffe, des Alters und/oder der Trockenmasseproduktion der Kultur in einem bestimmten Stadium;
   • gemäß den genannten Nährwertindizes die Festlegung der für jeden der genannten Nährstoffe zu erreichenden histologischen Elementgehalte;
   • gemäß den oben genannten histologischen Elementgehalte, die für jedes der oben genannten Elemente zu erreichen ist, die Empfehlung der Beiträge von Elementen, die in die Kultur eingebracht werden sollen, um so ihren Ernährungszustand im Hinblick auf das Fehlen von Mangelzuständen und/oder Ernährungsungleichgewichten zu optimieren;

   charakterisiert dadurch, dass;

   • die n Normalwerte $x_n$ durch Extrapolation einer Stickstoffernährungsfunktion (FAN) vom Typ $X_n = f(NNI)$ bestimmt werden, wenn NNI (*nitrogen nutrition index,* alias Stickstoffernährungsindex) gleich oder größer ist als ein bestimmter Wert zwischen 0,90 und 1,10, also von 1,00 +/- 0,10 ist;
   • die besagte FAN mathematisch nach einer Funktion beschrieben wird, die ausgewählt wird aus einer Gruppe von Polynomfunktionen, vorteilhafterweise 2. Grades, Exponential-, Potenzfunktionen, logarithmischen, sogar logistischen und/oder nichtlinearen Funktionen mit oberen und/oder unteren Asymptoten.

2. Methode zur multivariaten Diagnose des Ernährungszustandes einer Pflanzenkultur und zur Empfehlung der zur Optimierung dieses Ernährungszustandes nach dem ersten Anspruch vorzunehmenden Zufuhr von Elementen, die dadurch charakterisiert ist, dass die Normalwerte $x_n$ durch Extrapolation einer Stickstoffernährungsfunktion (FAN) vom Typ $x_n = f(NNI)$ bestimmt werden, wenn NNI (*nitrogen nutrition index,* alias Stickstoffernährungsindex) gleich oder sogar größer als 1 ist.

3. Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass die Berechnung der Nährwertindizes $Ix_n$ für jeden dieser n Nährstoffe unter Verwendung arithmetischer Mittel wie folgt durchgeführt wird:

$$Ix_A = (f(A/B) + f(A/C) + f(A/D) ... + f(A/Z)) / n-1,$$

$$Ix_B = (-f(A/B) + f(B/C) +f(B/D) ... + f(B/Z)) / n-1,$$

$$Ix_C = (-f(A/C) - f(B/C) + f(C/D) ... + f(C/Z)) / n-1,$$

.
.
.

$$Ix_Z = (-f(A/Z) - f(B/Z) - f(C/Z) ... - f(Y/Z)) / n-1$$

wo n die Anzahl der betrachteten Nährstoffe ist und A, B, C usw. bis Z eine Reihe von n histologischen Gehalten, $X_n$, von diesen (Spuren-)Elemente für die Ernährung, wie hier in Anspruch 1 vorgeschlagen und in einem gegebenen Entwicklungsstadium festgelegt, und dem Vergleich jedes Index A/B, A/C, A/D usw. in einem normalen Verhältnis, das a/b, a/c, a/d usw. entspricht, wodurch nennenswerte Abweichungen wie folgt festzustellen sind:

wenn A/B größer oder gleich a/b ist, also -

$$f(A/B) = [\{(A/B) / (a/b)\} - 1] \times (1000/CV)$$

wenn A/B kleiner als a/b ist, also -

$$f(A/B) = [1 - \{(A/B) / (a/b)\}] \times (1000/CV)$$

wenn a, b, c usw. bis z ihre Normalwerte sind, x, für die gleichen n (Spuren)-Elemente, die so durch Extrapolation einer Stickstoffernährungsfunktion (FAN) vom Typ $x_n = f(NNI)$ bestimmt werden, wenn NNI gleich oder größer als 1,00 ist und CV der mit der rationalen Norm verbundene Variationskoeffizient vom Typ a/b, a/c usw. ist.

4. Methode zur multivariaten Diagnose des Ernährungszustandes einer Pflanze und zur Empfehlung der zur Optimierung dieses Ernährungszustandes nach dem ersten Anspruch vorzunehmenden Zufuhr von Elementen, die dadurch charakterisiert ist, dass die Berechnung der Nährwertindizes $Ix_n$ für jedes der n (Spuren)-Elemente wie folgt mit geometrischen Mitteln vorgenommen wird:

$$Ix_n = ( 1/Sx_n ) \times ( \log(X_n / g(X)) - \log(x_n / g(x)) )$$

wo g(X) und g(x) jeweils die geometrischen Mittel der histologischen Gehalte der n (Spuren-) Elemente für die Ernährung (i), gemessen in der bearbeiteten Kultur im Laufe von Diagnose (g(X)) und (ii) Normalen, bestimmt durch Extrapolation einer *Stickstoffernährungsfunktion* (FAN) vom Typ xn = f(NNI), wenn NNI (*nitrogen nutrition index* alias Stickstoffernährungsindex) gleich oder größer 1,00 ist, während $Sx_D$ die Quadratwurzel des Variationskoeffizienten (CV) ist, der sonst bei der Berechnung der DRIS-Indizes verwendet wird, und zwar der Variationskoeffizient CV, der mit der rationalen Norm vom Typs a/b, a/c usw. verbunden ist, und schließlich sind $X_n$ und $X_n$ die histologischen Elementgehalte für jedes der n (Spuren)-Elemente.

5. Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass der CV (Variationskoeffizient, %), der normalerweise der Norm vom Typ a/b zugeordnet ist, durch die Variable CVAR ersetzt wird:

$$CVAR = \{(\%R_i^2 - 100)\}^{1/2} + \{(\%R_j^2 - 100)\}^{1/2}$$

wobei $\% R_i^2$, $\% R_j^2$, i und j die beiden Bestimmtheitsmaße (%) der genannten n FAN-Funktionen bezeichnen, $x_n = f(NNI)$ die beiden der betrachteten (Spuren)-Elemente.

6. Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass die Abweichung jedes der Indizes im Vergleich zu 0 ein Ungleichgewicht der Gehalte der (Spuren-) Elemente im Vergleich zu den anderen betrachteten n-1 (Spuren-)Elementen anzeigt, einen negativen Ernährungsindex, der hier auf einen relativen Mangel hinweist, und einen positiven Ernährungsindex, der auf einen relativen Überschuss der betreffenden (Spuren-)Nährstoffe hinweist.

7. Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass die Summe der Nährwertindizes für die betrachteten n (Spuren-)Elemente gleich 0 sein muss, damit eine Diagnose des Ernährungsgleichgewichts hergestellt werden kann.

**8.** zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass die Ermittlung der zu erreichenden histologischen Gehalte durch wiederholtes Einstellen der Werte der verschiedenen für die zu verarbeitende Kultur beobachteten histologischen Elementgehalte erfolgt, sodass die Ernährungsindizes und ihre Summe gleich 0 sind.

**9.** Methode zur multivariaten Diagnose des Ernährungszustandes einer Pflanzenkultur und zur Empfehlung der zur Optimierung dieses Ernährungszustandes gemäß dem vorstehenden Anspruch vorzunehmenden Zufuhr von Elementen, die dadurch charakterisiert ist, dass nur die Werte der histologischen Elementgehalte für diese (Spuren-)Elemente für die Ernährung mit negativen Nährwertindizes eingestellt werden.

**10.** Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass die Empfehlung der Zufuhr von Elementen, um die genannten histologischen Elementgehalte zu erreichen, wie folgt berechnet wird:

$$([e]_n - X_n) \times MSPA$$

wo $[e]_n$ der angestrebte histologische Elementgehalt ist, der nach Feststellung der obengenannten wiederholten Anpassung zu erreichen ist, $X_n$ der festgestellte histologische Elementgehalt, der nach Feststellung der obengenannten Diagnose zu korrigieren ist, und MSPA die Trockenmasse der oberirdischen Teile ist, am besten ausgedrückt in Tonnen je Hektar (t/ha).

**11.** Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass die Entnahme von Trockenmasse aus den oberirdischen Teilen zur vorgenannten Bestimmung ihrer n histologischen Gehalte an Mengen- und/oder Spurenelementen zwischen oder in den als BBCH 31 und 69 bezeichneten Entwicklungsstadien, insbesondere zwischen oder in den Stadien BBCH 35 und 61, vorteilhaft zwischen oder in den Stadien BBCH 39 und 55, durchgeführt wird.

**12.** Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass Trockenmasse aus den oberirdischen Teilen zur vorgenannten Bestimmung ihrer n histologischen Gehalte an Mengen- und/oder Spurenelementen nicht nur das Blattwerk, insbesondere Blätter und Blütenstände, noch besser die gesamte oberirdische Biomasse einschließlich Stängel, Blütenständen, Laub und gegebenenfalls Früchten, also auch Körner in der Entstehung, umfassen.

**13.** Methode zur multivariaten Diagnose des Ernährungszustandes einer Pflanzenkultur und zur Empfehlung der zur Optimierung dieses Ernährungszustandes gemäß eines der vorstehenden Ansprüche vorzunehmenden Zufuhr von Elementen, die dadurch charakterisiert ist, dass es sich um eine Kultur aus den Bereichen Landwirtschaft, Obst- oder Gemüsebau, Weinbau oder Gartenbau handelt.

**14.** Methode zur multivariaten Diagnose des Ernährungszustandes einer Pflanzenkultur und zur Empfehlung der zur Optimierung dieses Ernährungszustandes gemäß des vorstehenden Anspruchs vorzunehmenden Zufuhr von Elementen, die dadurch charakterisiert ist, dass es sich um Kulturen aus den Bereichen Landwirtschaft, Obst- und Gemüsebau sowie Gartenbau und darunter ausgewählt eine Gruppe mit Hauptkulturen wie Weizen, Raps und Gerste, insbesondere Winterkulturen, Mais und Sorgho, Futterkulturen, insbesondere Nicht-Fabaceae wie Weidelgras *(Lolium spp.)*, Gemüsekulturen wie Tomaten, Salat und Erdbeeren, Weinreben *(Vitis vinifera)*, und auch Gartenbaukulturen wie Begonien oder andere Topf- oder Schnittblumen sowie Baumkulturen wie Äpfel, Aprikosen oder Birnen handelt.

**Claims**

**1.** Multi-variable diagnostic method of the nutritional status of a crop and for the recommendation of the amounts of nutritional elements to apply to optimize this nutritional state comprising the following steps;

• the sampling of the crop's aerial dry matter and the determination of its *n* marco - elemental histological contents, X, selected from a group consisting of N, P, K, Ca, Mg, and/or S, or even Na, and/or trace elements contents selected from a group comprising Fe, Mn, Zn, Cu, B, Mo, Cl, Si and/or Co;

• the establishment of normal histological contents, $x_n$, for each of the *n* aforesaid nutrients being considered;

• with respect to these *n* $x_n$ normal values, the calculation of nutritional indices, $Ix_n$, for each of the *n* aforementioned nutrients by multiple comparison of nutritional ratios based on the arithmetic means via procedures such as DRIS *(diagnosis and recommendation integrated system),* the geometric means via procedures such as CND *(compositional nutrient diagnosis),* or any other multivariate method taking into account the interactions of the above nutrients, age and/or dry matter production of the crop at some given stage of growth;

• according to the aforementioned nutritional indices, the establishment of elemental histological levels to be achieve for each of the aforesaid *n* nutrients;

• based on the aforesaid elemental histological levels to be achieved for each of said elements, the recommendation of amounts of such nutritional elements to apply so as to optimize the nutritional status of the crop as warranted by an absence of deficiencies and/or nutritional imbalances;

**characterized in that**;

• the n normal values $x_n$ are determined by extrapolation of a *nitrogen nutritional function* (FAN), $x_n = f$ (NNI) given that NNI (nitrogen nutrition index) is equal or greater than a certain value between 0.90 and 1.10, that is 1.00 +/- 0.10;

• the aforesaid FAN is described mathematically using a function selected from a group comprising of polynomial - preferably of second degree, exponential, power, logarithmic or logistic and/or non-linear functions comprising upper and/or lower asymptotes.

2.   Multi-variable diagnostic method of the nutritional status of a crop and for the recommendation of the amounts of nutritional elements to apply according to the first claim, **characterized in that** the normal values $x_n$ are determined by extrapolation of a *nitrogen nutritional function* (FAN), $x_n = f$ (NNI) when NNI (*nitrogen nutrition index*) is equal to or greater than 1.

3.   Multi-variable diagnostic method of the nutritional status of a crop and for the recommendation of the amounts of nutritional elements to apply according to any of the preceding claims **characterized in that** the calculation of nutritional indexes $Ix_n$, for each of these nutrients is done as follows using the arithmetic averages;

$$Ix_A = (f (A / B) + f (A / C) + f (A / D) ... + f (A / Z)) / n\text{-}1,$$

$$Ix_B = (\text{-}f (A / B) + f (B / C) + f (B / D) ... + f (B / Z)) / n\text{-}1,$$

$$Ix_C = (\text{-}f (A / C) \text{-} f (B / C) + f (C / D) ... + f (C / Z)) / n\text{-}1,$$

$$.$$
$$.$$
$$.$$

$$Ix_Z = (\text{-}f (A / Z) \text{-} f (B / Z) \text{-} f (C / Z) ... \text{-} f (Y / Z)) / n\text{-}1$$

given that n is the number of nutrients considered, and A, B, C etc. up to Z a series of n histological elemental contents, $X_n$, as proposed herein and established at some stage of crop development, and comparing each index A/B, A/C, A/D, etc., to a corresponding normal ratio a/b, a/c, a/d, etc., revealing as such appreciable differences as follows;

if A / B is greater than or equal to a / b, then -

$$f (A / B) = [\{(A / B) / (a / b)\} \text{-} 1] \times (1000 / CV)$$

if A / B is smaller than a / b, so -

$$f (A / B) = [1 \text{-} \{(A / B) / (a / b)\}] \times (1000 / CV)$$

given that a, b, c etc. up to z are normal values, x, for these n (oligo) elements thus determined by extrapolation of a *nitrogen nutritional function* (FAN), $x_n = f(NNI)$ when NNI is equal or greater than 1.00, and CV the coefficient of variation associated with the type of rational norm a/b, a/c, etc.

4. Multi-variable diagnostic method of the nutritional status of a crop and for the recommendation of the amounts of nutritional elements to apply according to the first claim, **characterized in that** the calculation of nutritional indices, $Ix_n$, for each of the n (oligo) elements is done as follows using geometric means;

$$Ix_n = (1 / Sx_n) \times (\log(X_n / g(X)) - \log(x_n / g(x)))$$

where $g(X)$ and $g(x)$ are respectively the geometric means of the histological contents for the n (oligo) nutrients, (i) measured for the crop undergoing diagnosis ($g(X)$) and, (ii) normal *values* determined by extrapolation of a *nitrogen nutritional function* (FAN) $x_n = f(NNI)$ when NNI (*nitrogen nutrition index*) is equal to or greater than 1.00, $Sx_D$ is the square root of the coefficient of variation (CV) used in the calculation of DRIS indices, namely the CV associated with the type of rational norm a/b, a/c, etc., and $X_n$ and $x_n$ are the elemental histological contents for each of the *n* (oligo) elements in consideration.

5. Multi-variable diagnostic method of the nutritional status of a crop and for the recommendation of the amounts of nutritional elements to apply according to any one of the preceding claims, **characterized in that** the CV (coefficient of variation, %) normally associated with the norms of type a/b is replaced by the variable called CVAR;

$$CVAR = \{(\% R_i^2 - 100)\}^{1/2} + \{(\% R_j^2 - 100)\}^{1/2}$$

given that for $R_i^2$ and $R_j^2$ i and j pertain to the two coefficients of determination (%) of the aforementioned n FAN, $x_n = f(NNI)$ for these two of n (oligo) elements in consideration.

6. Multi-variable diagnostic method of the nutritional status of a crop and for the recommendation of the amounts of nutritional elements to apply according to any one of the preceding claims, **characterized in that** the difference of each of the indices with respect to 0 indicates an imbalance in the levels of the (oligo) nutritional element compared to the other n-1 (oligo) elements considered, a negative nutritional index revealing here a relative deficiency and a positive nutritional index revealing a relative excess of the (oligo) elements nutritive in question.

7. Multi-variable diagnostic method of the nutritional status of a crop and for the recommendation of the amounts of nutritional elements to apply according to any one of the preceding claims **characterized in that** the sum of the nutritional indices for the n (oligo) elements considered must equal 0 for a diagnosis of nutritional equilibrium to be established.

8. Multi-variable diagnostic method of the nutritional status of a crop and for the recommendation of the amounts of nutritional elements to apply according to any one of the preceding claims **characterized in that** the establishment of the histological contents to be attained is done by reiterative adjustment of the values of the different elemental histological contents for that crop in the course of yield development so as to make said nutritional indices and their sum equal to 0

9. Multi-variable diagnostic method of the nutritional status of a crop and for the recommendation of the amounts of nutritional elements to apply according to the preceding claim **characterized in that** only the elemental histological levels for (oligo) nutrients with negative nutritional indices are adjusted.

10. Multi-variable diagnostic method of the nutritional status of a crop and for the recommendation of the amounts of nutritional elements to apply according to any one of the preceding claims, **characterized in that** the recommendation of the elemental contributions for attaining for the *n* the aforesaid elemental histological contents is calculated as follows;

$$([e]_n - X_n) \times MSPA$$

where $[e]_n$ is the target elemental histological content to be achieved established once the said reiterative adjustment has been made, $X_n$ is the elemental histological content to be corrected once the aforementioned diagnostic has been established, and MSPA the dry matter of the aerial parts of the crop, advantageously expressed in tons per hectare (t / ha).

11. Multi-variable diagnostic method of the nutritional status of a crop and for the recommendation of the amounts of nutritional elements to apply according to any one of the preceding claims, **characterized in that** the sampling the aerial dry matter of the crop for the aforesaid determination of their elemental histological contents, be it macronutrients and/or trace (oligo) elements, is carried out between or at the development stages BBCH 31 and 69, more particularly between or at stages BBCH 35 and 61, and advantageously between or at stages BBCH 39 and 55.

12. Multi-variable diagnostic method of the nutritional status of a crop and for the recommendation of the amounts of nutritional elements to apply according to any one of the preceding claims, **characterized in that** the dry matter of the aerial parts of the crop for the aforesaid determination of their n elemental histological contents in macronutrients and/or trace (oligo) elements is comprised of the foliage, more particularly the foliage and the inflorescences, or even more advantageously all of the aerial biomass including stems, inflorescences, foliage and, where appropriate, developing fruits and/or grains.

13. Multi-variable diagnostic method of the nutritional status of a crop and for the recommendation of the amounts of nutritional elements to apply according to any one of the preceding claims, **characterized in that** the crop is an agronomic, vegetable, arboricultural, grape (wine) or horticultural crop.

14. Multi-variable diagnostic method of the nutritional status of a crop and for the recommendation of the amounts of nutritional elements to apply according to the preceding claim, **characterized in that** the agronomic, vegetable, arboricultural, grape (wine) or horticultural crop are chosen from a group comprising field crops such as an in particular winter wheat, rapeseed and barley, maize and sorghum, fodder crops, especially non-*Fabaceae* ones such as ryegrass (*Lolium* spp.), as well as vegetable crops such as tomato, lettuce and strawberry, grapevine *(Vitis vinifera)*, or culture horticultural crops such as begonias or any other potted flowers or cut, as well as arboreal culture such as apple, apricot or pear.

Figure 1

Figure 2 (Blé)

Figure 3 (colza)

Figure 4 (tournesol)

**blé : INNO 1,00 / 0,90 - BBCH 47-49 (5 t/ha MSPA)**

| | %N | %P | %K | %Ca | %Mg |
|---|---|---|---|---|---|
| | 2,473 | 0,833 | 3,435 | 0,458 | 0,165 |
| | 2,375 | 0,887 | 3,370 | 0,486 | 0,195 |
| | 2,02 | 0,83 | 3,37 | 0,458 | 0,157 |

| | %N | %P | %K | %Ca | %Mg |
|---|---|---|---|---|---|
| d[e] sans INNO | 1,18 | 1,07 | 1,00 | 1,06 | 1,24 |
| d[e] avec INNO | 1,22 | 1,00 | 1,02 | 1,00 | 1,05 |

Figure 5

**colza : INNO 1,00 / 0,90 - BBCH 55-57 (2 t/ha MSPA)**

| | 3,600 | 1,250 | 4,530 | 2,152 | 0,360 | 1,750 |
|---|---|---|---|---|---|---|
| | 2,66 | 1,15 | 4,53 | 2,152 | 0,32 | 1,22 |
| | %N | %P | %K | %Ca | %Mg | %SO3 |

| | %N | %P | %K | %Ca | %Mg | %SO3 |
|---|---|---|---|---|---|---|
| □ d[e] sans INNO | 1,35 | 1,09 | 1,00 | 1,00 | 1,13 | 1,43 |
| ▨ d[e] avec INNO | 1,69 | 1,13 | 1,00 | 1,00 | 1,19 | 1,56 |

Figure 6

**tournesol : INNO 1,00 / 0,90 - BBCH 55-57 (2 t/ha MSPA)**

| | %N | %P | %K | %Ca | %Mg |
|---|---|---|---|---|---|
| | 2,900 | 0,810 | 7,500 | 1,655 | 0,550 |
| | 2,300 | 0,810 | 6,500 | 1,700 | 0,580 |
| | 1,79 | 0,81 | 5,98 | 1,655 | 0,513 |

| | %N | %P | %K | %Ca | %Mg |
|---|---|---|---|---|---|
| □ d[e] sans INNO | 1,28 | 1,00 | 1,09 | 1,03 | 1,13 |
| ▨ d[e] avec INNO | 1,62 | 1,00 | 1,25 | 1,00 | 1,07 |

Figure 7

Figure 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **AGNUSDEI, MG et al.** Critical N concentration can vary with growth conditions in forage grasses: implications for plant N status assessment and N deficiency diagnosis. *Nutr. Cycl. Agroecosyst.,* 2010, vol. 88 (2), 215-230
- Comparison of DRIS and critical level approach for evaluating nutrition status of wheat in District Hyderabad, Pakistan. **AKHTER, N.** Inaugural-Dissertation, zur Erlangung des Grades Doktor der Agrarwissenschaften (Dr. agr.). Rheinischen Friedrich-Wilhelms-Universität, 2011
- **BANGROO, S.A. ; M.I. BHAT ; TAHIR ALI ; AZIZ M.A. ; M.A. BHAT ; MUSHTAQ A. WANI.** Diagnosis and Recommendation Integrated System (DRIS). *International J. Curr. Res.,* 2010, vol. 10, 084-097
- **COLNENNE, C ; JM MEYNARD ; R REAU ; E JUSTES ; A MERRIEN.** Determination of a critical nitrogen dilution curve for winter oilseed rape. *Ann. Bot.,* 1998, vol. 81, 311-317
- **FARRUGIA, A ; L THÉLIER-HUCHÉ ; S VIOLLEAU ; JM LEBRUN ; A BESNARD.** L'Analyse d'herbe pour piloter la fertilisation phosphatée et potassique des prairies : exemples d'application de la méthode. *Fourrages,* 2000, vol. 164, 447-459
- **GASTAL, F ; G LEMAIRE.** N uptake and distribution in crops : an agronomical and ecophysiological perspective. *J. Exp. Bot.,* 2002, vol. 53, 789-799
- **HUETT, DO et al.** Determination of critical nitrogen concentrations of zucchini squash cucurbita pepo I. cultivar blackjack grown in sand culture. *Austl. J. Exp. Agric.,* 1991, vol. 31 (6), 835-842
- **JEUFFROY, MH ; B NEY ; A OURRY.** Integrated physiological and agronomic modelling of N capture and use within the plant. *J. Exp. Bot.,* 2002, vol. 53, 809-823
- **JOUANY, C ; P, CRUZ ; JP THEAU.** Diagnostique du statut de nutrition phosphatée et potassique des prairies naturelles en présence de légumineuses. *Fourrages,* 2005, vol. 184, 547-555
- **JOUANY, C. ; P CRUZ ; P PETIBON ; M. DURU.** Diagnosing phosphorus status of natural grassland in the presence of white clover. *Europ. J. Agron.,* 2004, vol. 21, 273-285
- **JUSTES, E ; B. MARY ; JM MEYNARD ; JM MACHET ; L. THÉLIER-HUCHÉ.** Determination of a critical nitrogen dilution curve for winter wheat crops. *Ann. Bot.,* 1994, vol. 74, 397-407

- **KHIARI, L. ; LE PARENT ; N. TREMBLAY.** The Phosphorus Compositional Nutrient Diagnosis Range for Potato. *Agron. J.,* 2001, vol. 93, 815-819
- **KHIARI, L ; LE PARENT ; NICOLAS TREMBLAY.** Critical Compositional Nutrient Indexes for Sweet Corn at Early Growth Stage. *Agron. J.,* 2001, vol. 93, 809-814
- **LEIBISCH, F.** Plant and soil indicators to assess the phosphorus nutrition status of agricultural grasslands. *Ph.D. (Doctor of Sciences) Thesis, ETH,* 2011
- **LEMAIRE, G ; E VAN OOSTEROM ; MH JEUFFROY ; F GASTAL ; A MASSIGNAM.** Crop species present different qualitative types of response to N deficiency during their vegetative growth. *Field Crop Res.,* 2008, vol. 105, 253-265
- **MCCRAY, M.** Sugarcane DRIS Calculator. Everglades research and education center. *3200 E Palm Beach Rd. Belle Glade, FL,* 2011, vol. 33430 (561), 993-1518, jmmccray@ufl.edu
- **MARINO, MA ; A MAZZANTI ; SG ASSUERO ; F GASTAL ; HE ECHEVERRIA ; F ANDRADE.** Nitrogen dilution curves and nitrogen use efficiency during winter-spring growth of annual ryegrass. *Agron. J.,* 2004, vol. 96, 601-607
- **NEUMANN, S ; ND. PAVELEY ; FD. BEED ; R. SYLVESTER-BRADLEY.** Nitrogen per unit leaf area affects the upper asymptote of Puccinia striiformis f.sp. tritici epidemics in winter wheat. *Plant Pathol.,* 2004, vol. 53, 725-732
- **OSAKI et al.** Carbon-nitrogen interaction related to P, K, Ca and Mg nutrients in field crops. *Soil Sci. Plant. Nutr.,* 1996, vol. 43 (3), 539-552
- **PLÉNET, D ; G LEMAIRE.** Relationships between dynamics of nitrogen uptake and dry matter accumulation in maize crops ; determination of critical N concentration. *Plant and Soil,* 2000, vol. 216, 65-82
- **PARENT, LE ; M. DAFIR.** A Theoretical Concept of Compositional Nutrient Diagnosis. *J. Amer. Soc. Hort. Sci.,* 1992, vol. 117, 239-242
- Service d'expérimentation. Le blé. Sadef, 1989
- Service d'expérimentation. Le colza. Sadef, 1989
- Service d'expérimentation. Le tournesol. Sadef, 1989

- **SALETTE, J ; L. HUCHÉ.** Diagnostic de l'état de nutrition minérale d'une prairie par l'analyse du végétal ; principes, mise en oeuvre, exemples. *Fourrages,* 1991, vol. 125, 3-18

- **SEASSAU C ; G DECHAMP-GUILLAUME ; E MESTRIES ; P DEBAEKE.** Nitrogen and water management can limit premature ripening of sunflower induced by Phoma macdonaldii. *Field Crops Res.,* 2010, vol. 115, 99-106

- **SILVEIRA CP ; GR NACHTIGALL ; FA MONTEIRO.** Norms for the diagnosis and recommendation integrated system for signal grass. *Sci. Agric.,* 2005, vol. 62 (6), 513-519

- Les grandes productions végétales. **SOLTNER, D.** Collections Sciences et Techniques Agricoles. 2005

- **THÉLIER-HUCHÉ, L ; A FARRUGIA ; P CASTILLON.** L'analyse d'herbe, un outil pour le pilotage de la fertilisation phosphatée et potassique des praires naturelles et temporaires. Institut de l'Élevage, ITCF, INRA, ACTA, Chambres d'Agriculture, COMIFER, 1999

- **ZIADI, N ; G BÉLANGER ; AN CAMBOURIS ; N TREMBLAY ; MC NOLIN ; A CLAESSENS.** Relationship between phosphorus and nitrogen concentrations in spring wheat. *Agron. J.,* 2008, vol. 100 (1), 80-86